(19) Europäisches Patentamt
European Patent Office
Office européen des brevets

(11) **EP 3 345 022 B1**

(12) **EUROPÄISCHE PATENTSCHRIFT**

(45) Veröffentlichungstag und Bekanntmachung des Hinweises auf die Patenterteilung:
**10.04.2024 Patentblatt 2024/15**

(21) Anmeldenummer: **16766862.3**

(22) Anmeldetag: **30.08.2016**

(51) Internationale Patentklassifikation (IPC):
**G02B 5/128** *(2006.01)* **F21V 7/00** *(2006.01)*

(52) Gemeinsame Patentklassifikation (CPC):
**G02B 5/128**

(86) Internationale Anmeldenummer:
**PCT/EP2016/070411**

(87) Internationale Veröffentlichungsnummer:
**WO 2017/037061 (09.03.2017 Gazette 2017/10)**

(54) **VORRICHTUNG ZUM BELEUCHTEN**

ILLUMINATION DEVICE

DISPOSITIF D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2015 DE 102015114496**

(43) Veröffentlichungstag der Anmeldung:
**11.07.2018 Patentblatt 2018/28**

(73) Patentinhaber:
• **Dachroth, Charlotte**
**10407 Berlin (DE)**
• **Jeschonnek, Ole**
**10119 Berlin (DE)**

(72) Erfinder:
• **Dachroth, Charlotte**
**10407 Berlin (DE)**
• **Jeschonnek, Ole**
**10119 Berlin (DE)**

(74) Vertreter: **Zimmermann & Partner Patentanwälte mbB**
**Postfach 330 920**
**80069 München (DE)**

(56) Entgegenhaltungen:
**US-A- 3 700 478 US-A1- 2014 204 576**

**Beschreibung**

Die vorliegende Erfindung betrifft eine Vorrichtung zum Beleuchten, insbesondere eine Beleuchtungsvorrichtung wie eine Leuchte sowie eine die Vorrichtung zum Beleuchten aufweisende Anzeigevorrichtung.

Leuchten mit herkömmlichen Lichtquellen, wie beispielsweise Leuchtstofflampen, erfordern zur Entblendung die Anordnung von Spiegelrastern, Lampenreflektoren, Lamellen oder optischen Platten wie Prismenplatten, die von der Lichtquelle ausgehende störende Strahlung gegenüber dem normalen Blickfeld der sich in der Umgebung befindenden Personen abschirmen. Derartige Lösungen, die besonders für Innenleuchten, wie beispielsweise Büroleuchten und Arbeitsplatzleuchten wichtig sind, erfordern jedoch häufig einen beträchtlichen Aufwand bei der Herstellung.

Beleuchtete bzw. leuchtende Anzeigen wie Informationstafeln und Werbetafeln werden zum Übermitteln verschiedener Arten von Signalen verwendet. Oft findet die Beleuchtung mittels konventioneller Lampen statt, die eingeschaltet werden um die üblicherweise tafelartigen Objekte zu beleuchten, wenn es dunkel ist oder zu Zeiten, in denen eine besondere Aufmerksamkeit erreicht werden soll. Hinsichtlich des Erzielens einer besonderen Aufmerksamkeit sind derartige Systeme relativ eingeschränkt. Es sind zudem verschiedene Lösungen bekannt, bei denen die Beleuchtung blinkt oder pulsiert, um eine erhöhte Aufmerksamkeit zu erzielen. Mittlerweile haben sich Passanten jedoch an derartige Anzeigen gewöhnt, sodass es schwieriger wird, damit eine erhöhte Aufmerksamkeit zu erzielen, insbesondere dann, wenn mehrere derartige Anzeigen benachbart zueinander angeordnet sind, was zu einer Reizüberflutung führen kann.

Die US20130301279 A1 beschreibt eine Anzeigevorrichtung zum Erzeugen eines 3D-Halo-Effekts. Die Anzeigevorrichtung weist ein reflektierendes Substrat, eine auf dem Substrat angeordnete erste Schicht mit Glasperlen eines niedrigen Brechungsindexes und mit mindestens einem Pigment, und eine LED-Lichtquelle zum Bestrahlen der ersten Schicht auf. Der Aufmerksamkeitsfaktor dieser Anzeigevorrichtung für Passanten ist jedoch ebenfalls begrenzt.

Im Hinblick auf das oben Gesagte, schlägt die vorliegende Erfindung eine Vorrichtung zum Beleuchten gemäß Anspruch 1 und eine Karte gemäß Anspruch 14 vor.

Gemäß einem Beispiel weist eine Vorrichtung zum Beleuchten eine zum Aussenden von Licht, das eine Wellenlänge aus einem Bereich von 380 nm bis 780 nm aufweist, geeignete Lichtquelle, und einen mit der Lichtquelle mechanisch verbundenen Retroreflektor auf. Der Retroreflektor hat einen Retroreflexionskoeffizienten von zumindest 10 cd/(lx m$^2$) bei der Wellenlänge, und /oder weist optische Elemente mit einem Brechungsindex von zumindest 1,6 bei der Wellenlänge auf.

Typischerweise kann die Lichtquelle Licht aus einem Spektralbereich (Wellenlängenbereich) des sichtbaren Lichtspektrums aussenden. Dementsprechend weist eine Vorrichtung zum Beleuchten typischerweise eine Lichtquelle zum Aussenden von Licht in einem Spektralbereich des sichtbaren Lichtspektrums, und einen mit der Lichtquelle mechanisch verbundenen Retroreflektor auf. Der Retroreflektor hat einen Retroreflexionskoeffizienten von zumindest 10 cd/(lx m$^2$) (Candela pro Lux und m$^2$) in dem Spektralbereich und/oder weist optische Elemente mit einem Brechungsindex von zumindest 1,6 in dem Spektralbereich auf.

Der Begriff "Retroreflektor" wie er vorliegend verwendet wird soll einen reflektierenden Körper oder eine reflektierende Fläche beschreiben, der bzw. die zumindest einen signifikanten Anteil eines einfallenden Lichts einer Lichtquelle für einen Einfallswinkelbereich von typischerweise zumindest ±20°, noch typischer zumindest ±45° in Richtungen zurück zur Lichtquelle reflektiert (Retroreflexion).

Ein Retroreflektor besitzt damit die Eigenschaft, im Gegensatz zu einem gewöhnlichen Spiegel, einfallende Lichtstrahlen mehr oder weniger exakt in deren Einfallsrichtung zurück zu reflektieren. Dabei werden die zurück reflektierten Strahlen typischerweise zu einem mehr oder weniger engen Lichtkegel aufgeweitet, der auch eine Binnenstruktur aufweisen kann.

Da Lichtquellen einen ganzen Satz von Lichtstrahlen auf den Retroreflektor aussenden, erzeugt dieser einen ganzen Satz von rückreflektierten Lichtkegeln, deren Achsen sich bestimmungsgemäß wieder genau in der Lichtquelle schneiden. Das betrifft auch die Lichtkegel, deren Licht jedoch, bei hinreichend kleiner Lichtquelle, um diese herum eine Lichterscheinung erzeugt, die als unscharfes, strukturiertes reelles Abbild der Lichtquelle interpretiert werden kann. Im Folgenden werden die Formulierungen "Lichterscheinung" und "unscharfes, strukturiertes reelles Abbild" synonym verwendet.

Unter einem unscharfen und strukturierten reellen Abbild der Lichtquelle soll vorliegend insbesondere ein reelles aufgeweitetes Abbild der Lichtquelle verstanden werden, das Strukturen von der Größenordnung von zumindest einem Zehntel einer Größe des Abbilds aufweist, die die Lichtquelle bzw. die lichtaussendende Fläche der Lichtquelle nicht aufweist. Beispielsweise kann die Struktur 3-dimensional sein und in einer oder mehreren Schnittebenen, die die Lichtquelle schneiden können, einen von einem jeweiligen Ring umgebenen zentralen Peak aufweisen, selbst wenn die Lichtquelle eine ebene lichtaussendende Fläche hat bzw. von dieser gebildet wird. Aus Gründen der Einfachheit wird im Folgenden häufig auch nur der Begriff "reelles Abbild" der Lichtquelle für das "unscharfe, strukturierte reelle Abbild" der Lichtquelle verwendet.

Der Begriff "optisches Element" wie er vorliegend verwendet wird, soll retroreflektierende Partikel, d.h. Partikel, die einfallende Lichtstrahlen mehr oder weniger exakt in deren Einfallsrichtung zurück zu reflektieren, mit einer Partikelgröße im Bereich von 10 $\mu$m (Mikrometer) bis 1 cm, typischerweise von 10 $\mu$m bis 2500 $\mu$m, noch typischer in einem Bereich von 25 $\mu$m bis 250 $\mu$m beschreiben, die Licht in dem Spektralbereich oder sogar in dem gesamten sichtbaren Lichtspektrums nur schwach absorbieren, und z.B. einen Transmissionsgrad von mehr als 0,8 oder sogar mehr als 0,9 aufweisen.

Bei den optischen Elementen kann es sich um Kugeln auf Basis eines bei der Wellenlänge oder sogar im Spektralbereich weitgehend transparenten Mediums, z.B. Mikrokugeln (im Folgenden auch als Kügelchen bezeichnet) mit einem Durchmesser w in einem Bereich von 10 $\mu$m bis 2500 $\mu$m, noch typischer in einem Bereich von 25 $\mu$m bis 250 $\mu$m, mit einem Brechungsindex (absoluten Brechzahl) n von zumindest 1,6 bei der Wellenlänge oder sogar in dem Spektralbereich des sichtbaren Lichtspektrums (im Mittel oder für jede der Wellenlängen aus dem Spektralbereich) oder sogar im gesamten sichtbaren Lichtspektrum handeln, typischerweise um Kunststoffkugeln oder Glaskugeln, d.h. um Kugeln auf Basis eines bei der Wellenlänge oder sogar im Spektralbereich weitgehend transparenten Kunststoffs oder Glases mit einem höheren Brechungsindex als Normalglas (Brechungsindex n ca. 1,5 und n $\leq$ 1,55), wie es bspw. in der US 20130301279 A1 verwendet wird. Mikrokugeln mit einem Brechungsindex n $\leq$ 1,55 werden auch als niedrig brechende Kügelchen (engl. "low index beads") bezeichnet.

Im Folgenden wird die Vorrichtung zum Beleuchten hauptsächlich mit Bezug zu Retroreflektoren auf Basis von Mikrokugeln (Kügelchen) als optische Elemente erläutert. Es können jedoch auch Retroreflektoren mit größeren optischen Elementen, z.B. retroreflektierender Beton, d.h. Retroreflektoren auf Basis von in einer Betonmatrix eingebetteten retroreflektierenden Kugeln mit Durchmessern bis zu etwa 1 cm, verwendet werden.

Beispielsweise können die Glaskugeln bzw. Glaskügelchen aus Flintglas (n=1,61), aus Schwerflintglas (n je nach Zusammensetzung, z.B. n = 1,85 für Lanthan-Schwerflintglas) oder aus $TiO_2$-BaO-$SiO_2$ -Glas (n = 1,93) bestehen. Bei den Kügelchen kann es sich um, sogenannte hochbrechende Kügelchen (engl. "high index beads") mit einem Brechungsindex um 1,9 (1,8 $\leq$ n $\leq$ 2) oder sogar um sogenannte superhochbrechende Kügelchen (engl. "super high index beads") mit einem noch höheren Brechungsindex von z.B. 2,2 (für Kügelchen aus $TiO_2$-BaO-ZnO-Glas) oder noch höher handeln.

Der (wellenlängenabhängige) Brechungsindex kann innerhalb des Kügelchens variieren. Ebenso können der Brechungsindex und auch die Größe der Kügelchen eines Retroreflektors herstellungsbedingt variieren. In diesen Ausführungsbeispielen ist ein maximaler und / oder ein effektiver (bspw. ein mittlerer) Brechungsindex n des Kügelchens größer oder gleich 1,6.

Außerdem können auch die der Lichtquelle zugewandten Hälften der Kügelchen mit einer Schicht bedeckt sein, deren Brechungsindex $n_s$ größer als 1 ist. In diesem Fall wird der Brechungsindex n des Kügelchens typischerweise so gewählt, dass $n/n_s \geq 1,6$ ist.

Auf Grund des relativ hohen Brechungsindexes der Kügelchen und des damit verbundenen relativ geringen Öffnungswinkel des von den Kügelchen als Lichtkegel rückgestreuten Lichts der Lichtquelle, der typischerweise maximal 30° beträgt, noch typischer in einem Bereich von 0,5° bis 20° liegt oder sogar noch typischer in einem Bereich von 0,5° bis 5°, ist die Blickwinkelstabilität des reellen Abbildes der Lichtquelle um die Lichtquelle herum, das durch eine Überlagerung der Lichtkegel entsteht, deutlich erhöht im Vergleich zu den 3D-Halo-Effekten. Dies führt zu einem erhöhten Aufmerksamkeitsfaktor, da das reelle Abbild der Lichtquelle für vorbeigehende Personen leichter und länger beobachtbar ist.

Der Brechungsindex der als optische Elemente typischerweise verwendeten Kügelchen liegt (bei der Wellenlänge oder sogar im Spektralbereich) typischerweise in einem Bereich von 1.7 bis 2.3, noch typischer in einem Bereich von 1.8 bis 2.0. Damit lassen sich besonders helle reelle Abbilder der Lichtquelle erzeugen.

Damit das reelle Abbild der lichtausstrahlenden Lichtquelle von einem hinter der Lichtquelle gelegenen Beobachtungsbereich aus beobachtet bzw. detektiert werden kann, wird die Größe der Lichtquelle so ausgewählt, dass ein Öffnungswinkel der Lichtquelle von einem jeweiligen Mittelpunkt der optischen Elemente, typischerweise der jeweiligen Kügelchen, aus betrachtet kleiner ist als ein Öffnungswinkel des jeweiligen rückgestreuten Lichtkegels.

Außerdem ist die Lichtquelle in einer senkrechten Projektion auf den Retroreflektor bzw. auf seine retroreflektierende Fläche typischerweise in einem zentralen Bereich des Retroreflektors angeordnet, der vom Rand des Retroreflektor beabstandet ist.

Dadurch ist das reelle Abbild aus verschiedenen Richtungen gut erkennbar. Typischerweise hat die Lichtquelle in senkrechter Projektion auf den Retroreflektor einen Abstand zum Rand des Retroreflektors von zumindest 10%, noch typischer zumindest 25% einer Ausdehnung des Retroreflektors (in der Projektionsebene). Beispielsweise kann die Lichtquelle symmetrisch bzw. zentral vor dem Retroreflektor angeordnet sein.

Bei der Lichtquelle handelt es sich typischerweise um eine Lichtquelle mit Ausmaßen die kleiner sind als ein Abstand zwischen der Lichtquelle und dem Retroreflektor, und z.B. maximal ein Drittel oder ein Fünftel des Abstands zwischen der Lichtquelle und dem Retroreflektor sind.

Noch typischer handelt es sich bei der Lichtquelle um eine Lichtquelle mit einer leuchtenden Fläche von weniger als 1 cm$^2$ oder sogar weniger als 0,25 cm$^2$ (Punktlichtquelle). Da die Aufweitung des reellen Abbilds der Lichtquelle typischerweise mit der leuchtenden Fläche der Lichtquelle abnimmt, ist die verwendete Lichtquelle typischerweise eine Lichtquelle, die in guter Näherung als Punktlichtquelle beschrieben werden kann. Bei ausgedehnten Lichtquellen, z.B. einer Lampe mit einem Reflektor oder Diffusor ist das reelle Abbild schwächer und weniger ausgeprägt, und daher schlechter sichtbar.

Beispielsweise kann die Lichtquelle eine (anorganische) Leuchtdiode (LED) oder eine organische Leuchtdiode (OLED) oder ein Laser, aber auch eine Kerze bzw. Kerzenflamme sein. OLEDs haben typischerweise zwar eine geringere Leuchtdichte als LEDs, lassen sich in Dünnschichttechnik aber kostengünstiger herstellen. Daher sind OLEDs besonders als Lichtquelle vor einem Retroreflektor einer Anzeigevorrichtung wie einer Karte interessant.

Gemäß einer Weiterbildung werden mehrere vor dem Retroreflektor angeordnete Lichtquellen verwendet. Diese können entlang einer Kurve, z.B. einer geschlossenen Kurve wie einem Kreis, einer Ellipse oder einem Polygon oder einer offenen Kurve wie einer Linie und einem Kreis- oder Ellipsenabschnitt, vor dem Retroreflektor angeordnet sein. Damit lässt sich der Aufmerksamkeitsfaktor weiter erhöhen.

Dabei kann vorgesehen sein, dass der Abstand der Lichtquellen zueinander so ausgewählt ist, dass sich die reellen Abbilder der lichtausstrahlenden Lichtquellen nicht überlagern oder dass sich die reellen Abbilder überlagern. Im letzten Fall ergibt sich für einen Beobachter der Eindruck einer entsprechend leuchtenden Kurve, wenn die Lichtquellen Licht aussenden.

Außerdem kann vorgesehen sein, dass die Lichtquellen mittels einer Steuerung der Vorrichtung zumindest in Gruppen individuell an- und abgeschaltet werden können. Durch Zu- und Abschalten einer Gruppe der Lichtquellen kann beim Betrachter ein zwischen voneinander isolierten reellen Abbildern und einem zusammenhängenden Abbild wechselnder Eindruck erzeugt werden. Damit lässt sich ein besonders hoher Aufmerksamkeitsfaktor erzielen.

Gemäß noch einer Weiterbildung weist die Vorrichtung ein Abschirmelement auf, typischerweise ein Abschirmelement für jede der Lichtquellen, dass vom Retroreflektor aus betrachtet hinter der Lichtquelle angeordnet ist, und Licht, dass von der Lichtquelle in Richtungen ausgeht, die vom Retroreflektor wegweisen, zumindest teilweise reflektiert und / oder absorbiert.

Dadurch kann erreicht werden, dass ein Beobachter im Beobachtungsbereich nur oder praktisch nur das reelle Abbild (die reellen Abbilder) der Lichtquelle(n), nicht aber die Lichtquelle(n) selbst sehen kann.

Dies ermöglicht zudem die Vorrichtung als entblendete Leuchte auszuführen. Da LEDs und OLEDs Licht typischerweise nur in einen Halbraum abgeben, ist bei diesen Lichtquellen die Funktion des Abschirmelements bereits integriert.

Bei dem Abschirmelement (den Abschirmelementen) kann es sich um Spiegel handeln. Dadurch kann die Helligkeit des jeweiligen reellen Abbildes einer Lichtquelle erhöht werden.

Aus dem gleichen Grund sind die typischerweise als optische Elemente des Retroreflektors verwendeten Kügelchen auf ihrer der Lichtquelle abgewandten Seite mit einer das Licht reflektierenden Schicht, z.B. einer Metallschicht versehen.

Der Retroreflektor kann eine Retroreflektorfolie aber auch ein retroreflektierender Stoff, beispielsweise ein retroreflektierend beschichtetes Textil (Leinwand) oder ein retroreflektierender Körper, z.B. eine retroreflektierende Platte sein. Der Retroreflektor bzw. eine retroreflektierende Fläche des Retroreflektors kann eben sein, aber auch eine Krümmung aufweisen.

Außerdem kann der Retroreflektor strukturiert und/oder fragmentiert sein. Beispielsweise kann der Retroreflektor Teilgebiete oder Teilflächen mit unterschiedlichen Retroreflexionskoeffizienten und / oder Löcher aufweisen.

Bei dem Retroreflexionskoeffizienten handelt es sich typischerweise um einen unter für retroreflektierende Materialien üblichen Normbedingungen gemessenen (spezifischen) Rückstrahlwehrt.

Typischerweise ist der Retroreflexionskoeffizient (im Folgenden auch als Rückstrahlwert $R_A$ bezeichnet) des Retroreflektors größer als 10 cd/(lx m$^2$), noch typischer größer als 100 cd/(lx m$^2$), und sogar noch typischer größer als 250 cd/(lx m$^2$).

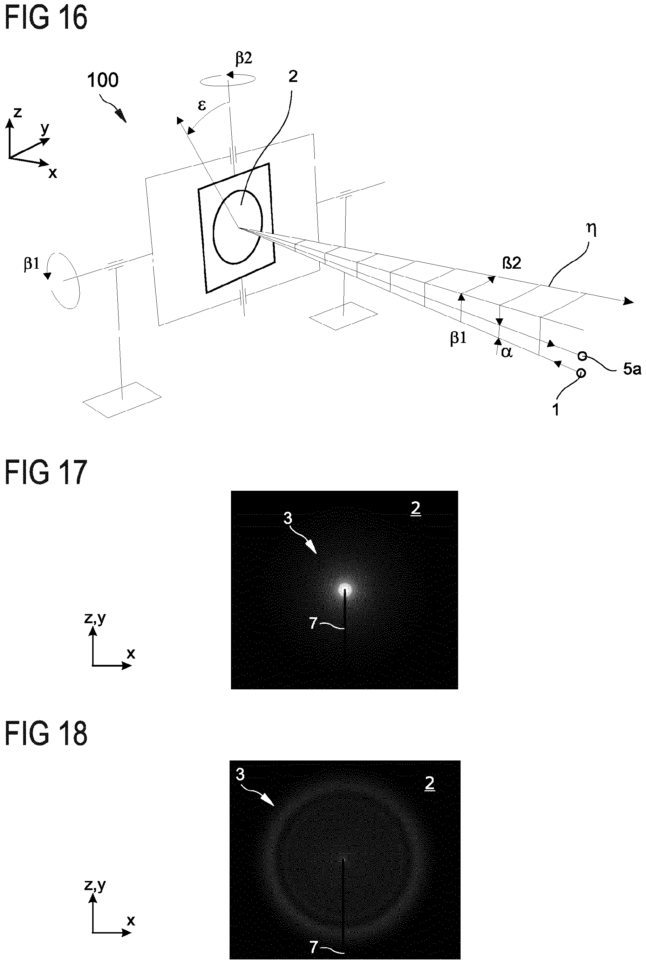

Dabei wird davon ausgegangen, dass die Rückstrahlwerte für die Wellenlänge bzw. den Spektralbereich mit einem für Retroreflexionsmessungen auf der Grundlage des CIE-Winkelsystems geeigneten Goniometer für Winkel $\beta1=5°$, $\alpha=12'$, $\beta2=\epsilon=0°$ bestimmt werden. Der Winkel $\alpha$ bezeichnet den Winkel zwischen der Beleuchtungsachse (Gerade von einem Bezugsmittelpunkt zum Mittelpunkt der Lichtquelle) und der Beobachtungsachse (Gerade vom Bezugsmittelpunkt zum Mittelpunkt eines Detektorkopfes), der Winkel $\epsilon$ den Verdrehungswinkel und die Winkel $\beta1$ und $\beta2$ orthogonale Komponenten des Winkels zwischen der Beleuchtungsachse und einer Bezugsachse (Gerade, die vom Bezugsmittelpunkt ausgeht) (siehe dazu auch Fig. 16 und zugehörige Beschreibung unten).

Der Spektralbereich (Wellenlängenbereich) kann relativ eng sein, z.B. in einem Bereich von 10 nm bis 20 nm liegen, aber auch größer sein, z.B. zumindest 100 nm oder sogar zumindest 200 nm betragen. Die jeweiligen Rückstrahlwerte können sogar für eine Mehrheit der Wellenlängen im sichtbaren Bereich (380 nm bis 780 nm), z.B. für einen Wellenlängenbereich von 380 nm bis 640 nm (Bereich erhöhter Lichtempfindlichkeit des menschlichen Auges beim Nachtsehen) oder von 400 nm bis 700 nm (Bereich erhöhter Lichtempfindlichkeit des menschlichen Auges beim Tagsehen), Werte von 10 cd/(lx m$^2$), typischerweise Werte oberhalb von 10 cd/(lx m$^2$) oder sogar oberhalb von 100 cd/(lx m$^2$) oder 200 cd/(lx m$^2$) aufweisen.

Auf Grund des hohen Rückstrahlwerts wird eine hohe Helligkeit des jeweiligen reellen Abbildes einer Lichtquelle gewährleistet. Die reellen Abbilder sind daher auch bei Tageslicht im Freien gut sichtbar. Dies ist für kleinere Rückstrahlwerte, z.B. für Rückstrahlwerte unterhalb von 3 cd/(lx m$^2$) häufig nicht der Fall.

Gemäß einer Ausführungsform weist eine Vorrichtung zur Beleuchtung eine Lichtquelle und einen vor der Lichtquelle angeordneten Retroreflektor mit einen Retroreflexionskoeffizienten von zumindest 10 cd/(lx m$^2$), typischerweise von zumindest 100 cd/(lx m$^2$) oder sogar zumindest 200 cd/(lx m$^2$), bei einer Wellenlänge aus dem sichtbaren Lichtspektrum oder sogar in einem Spektralbereich des sichtbaren Lichtspektrums auf. Dabei ist die Lichtquelle derart vor dem Retroreflektor angeordnet, dass von der Lichtquelle ausgehendes und auf Teilbereiche des Retroreflektors auftreffendes Licht aus dem Spektralbereich von den Teilbereichen als ein Satz von Lichtkegeln mit einem Öffnungswinkel von maximal 30°, typischerweise in einem Bereich von 0,5° bis 20°, auf die Lichtquelle zurückgeworfen werden kann, so dass ein aus einem hinter der Lichtquelle gelegenen Beobachtungsbereich beobachtbares unscharfes, strukturiertes reelles Abbild der Lichtquelle ("Lichterscheinung") um die Lichtquelle erzeugt wird.

Die Teilbereiche des Retroreflektors können von optischen Elementen des Retroreflektors gebildet werden, z.B. von entsprechenden Kügelchen oder mikroprismatischen Elementen.

Gemäß noch einer Ausführungsform weist eine Vorrichtung zur Beleuchtung einen Retroreflektor und eine Lichtquelle auf. Dabei ist die Lichtquelle derart vor dem Retroreflektor angeordnet, dass Licht, das von der Lichtquelle ausgeht und vom Retroreflektor zurückgeworfen wird, eine beobachtbare Lichterscheinung in einer Ebene bildet, die zwischen dem Retroreflektor und der Lichtquelle angeordnet ist oder die Lichtquelle schneidet, wobei die Lichterscheinung bezüglich einer Verbindungslinie zwischen der Lichtquelle und dem Retroreflektor einen Öffnungswinkel, aufweist, der maximal 30° beträgt, typischerweise in einem Bereich von 0,5° bis 20° liegt.

Bei der beobachtbaren Lichterscheinung handelt es sich um ein unscharfes reelles Abbild der Lichtquelle, das typischerweise durch eine Überlagerung einer Vielzahl von (rückgeworfenen) Lichtkegeln entsteht, die jeweils von einer Vielzahl optischer Elemente des Retroreflektors, wie bspw. Glaskügelchen mit einem Brechungsindex oberhalb von 1,6, ausgehen, wenn sie von der Lichtquelle angestrahlt werden.

Typischerweise ist die Ebene (die Ebenen), in der die beobachtbare Lichterscheinung gebildet wird, weiter vom Retroreflektor als von der Lichtquelle entfernt.

Da das reelle Abbild der Lichtquelle vor dem Retroreflektor gebildet wird und von diesem beabstandet ist, typischerweise die Lichtquelle sogar weitgehend, z.B. abgesehen einer Halterung der Lichtquelle, umgibt, wobei deren Primärstrahlen durch ein Abschirmelement für einen Beobachter in einem Beobachtungsbereich abgeschirmt sein können, entsteht für den Beobachter ein besonders angenehmes und / oder beeindruckendes Lichterlebnis.

Gemäß einer Ausführungsform weist eine Leuchte, einen Retroreflektor mit einem Retroreflexionskoeffizienten von typischerweise zumindest 10 cd/(lx m$^2$) und eine vor dem Retroreflektor angeordnete Lichtquelle auf, die typischerweise mit dem Retroreflektor mechanisch verbunden ist.

Mit dieser Leuchte können sehr beeindruckende Beleuchtungseffekte erzielt werden. Außerdem ist die Leuchte kostengünstig herstellbar.

Gemäß einer Weiterbildung weist die Leuchte ein hinter der Lichtquelle angeordnetes Abschirmelement auf, das zumindest einen Teil des von der Lichtquelle nicht in Richtungen auf den Retroreflektor ausgehenden Lichts blockiert oder ablenkt, z.B. absorbiert und / oder reflektiert.

Typischerweise ist das Abschirmelement auf einer (gedachten) gemeinsamen Verbindungslinie mit der Lichtquelle und dem Retroreflektor angeordnet. Dadurch kann verhindert werden, dass von der Lichtquelle ausgehende Primärstrahlen in einen Beobachtungsbereich gelangen, der vom Retroreflektor aus gesehen hinter der Lichtquelle und dem Abschirmelement liegt.

Beispielsweise kann das Abschirmelement als Spiegel oder Absorber ausgeführt sein, der auf der (gedachten) gemeinsamen Verbindungslinie mit der Lichtquelle und dem Retroreflektor angeordnet ist und zumindest einen überwiegenden Anteil des von der Lichtquelle ausgehenden Lichtes reflektiert (Spiegel) bzw. absorbiert (Absorber), das von der Lichtquelle in Richtungen ausgeht, die eine zu einer Normalenrichtung des Retroreflektors parallele Vektorkomponente haben.

Dies ermöglicht eine effektive und kostengünstige Entblendung der Leuchte. Direktblendungen und Reflexblendungen auf glänzenden Unterlagen können weitgehend vermieden werden. Außerdem kann ein Raum oder eine Arbeitsfläche mittels der Leuchte sehr gleichmäßig ausgeleuchtet werden. Weiterhin kann die Schattigkeit ausgewogener sein und das Licht weicher und angenehmer wirken.

Gemäß noch einer Ausführungsform weist eine Anzeigevorrichtung oder Karte, z.B. eine Glückwunschkarte, einen Retroreflektor mit einem Retroreflexionskoeffizienten von typischerweise zumindest 10 cd/(lx m$^2$) und eine vor dem Retroreflektor angeordnete Lichtquelle auf. Typischerweise bildet der Retroreflektor eine Anzeigefläche der Anzeigevorrichtung.

Mit einer derartigen Anzeigevorrichtung oder Karte kann mit geringem Aufwand ein sehr hoher Aufmerksamkeitsfaktor erzielt werden.

Dabei können Retroreflektor und Lichtquelle mechanisch miteinander verbunden sein.

Beispielsweise kann die Karte eine Klappkarte mit zwei gegeneinander klappbaren Klappteilen und einer dazwischen angeordneten Haltestruktur sein, wobei die Lichtquelle, z.B. eine LED an einer dem Retroreflektor zugewandten Rückseite der Haltestruktur angeordnet ist.

Wenn bei Aufklappen der Karte und / oder durch Aktivieren eines Schalters der Karte, eine elektrische Verbindung zwischen der Lichtquelle und einer Batterie der Karte hergestellt wird und die Lichtquelle Licht aussendet, wird vor dem Retroreflektor, der mit einem Motiv, einem Bild und/oder einem Schriftzug versehen sein kann (und zu diesem Zweck z.B. neben den optische Elementen farbige Pigmente enthält), ein reelles Abbild der Lichtquelle erzeugt.

Die Haltestruktur kann zudem zugleich die Funktion des oben beschriebenen Abschirmelements übernehmen. Dadurch lässt sich ein besonders hoher Aufmerksamkeitsfaktor erzielen.

Die vorstehend beschriebenen Ausführungsformen können beliebig miteinander kombiniert werden.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1 einen schematischen Querschnitt einer Vorrichtung zum Beleuchten gemäß einem Ausführungsbeispiel;

Fig. 2 einen weiteren schematischen Querschnitt der in Fig. 1 gezeigten Vorrichtung gemäß einem Ausführungsbeispiel; und

Fig. 3 einen schematischen Querschnitt des Retroreflektors der in Fig. 1 dargestellten Vorrichtung gemäß einem Ausführungsbeispiel;

Fig. 4 und Fig. 5 schematische Querschnitte durch ein optisches Element des in Fig. 3 dargestellten Retroreflektors;

Fig. 6 eine optische Leistung pro Flächeneinheit, die von einem Kügelchen in Abhängigkeit von dessen Brechungsindex zurückgeworfen wird gemäß einer Simulation;

Fig. 7 ein gemessenes Leistungsprofil eines reellen Abbildes in der Ebene der Lichtquelle, wie es mittels der in den Figuren 1, 2 gezeigten Vorrichtung erzeugt werden kann sowie ein berechnetes Leistungsprofil, wobei der Retroreflektor Kügelchen mit einem Brechungsindex von 1,87 aufweist;

Fig. 8 ein gemessenes Leistungsprofil eines reellen Abbildes, wie es mittels der in den Figu-ren 1, 2 gezeigten Vorrichtung erzeugt werden kann sowie ein berechnetes Leistungsprofil, wobei der Reflektor Kügelchen mit einem Brechungsindex von 1,52 aufweist;

Fig. 9 einen schematischen Querschnitt einer Vorrichtung zum Beleuchten gemäß einem Ausführungsbeispiel;

Fig. 10 eine perspektivische Ansicht einer Leuchte gemäß einem Ausführungsbeispiel;

Fig. 11 eine perspektivische Ansicht einer Karte gemäß einem Ausführungsbeispiel;

Fig. 12 eine perspektivische Ansicht einer Karte gemäß einem Ausführungsbeispiel;

Fig. 13 eine perspektivische Ansicht einer Karte gemäß noch einem Ausführungsbeispiel;

Fig. 14 einen schematischen Querschnitt einer Vorrichtung zum Beleuchten gemäß einem Ausführungsbeispiel;

Fig. 15 einen schematischen Querschnitt einer Anordnung zum Beleuchten;

Fig. 16 eine perspektivische Ansicht eines Goniometers;

Fig. 17 ein Bild des reellen Abbildes, wie es mittels der in den Figuren 1, 2 gezeigten Vorrichtung erzeugt werden kann, wobei der Retroreflektor Kügelchen mit einem Brechungsindex von 1,87 aufweist; und

Fig. 18 ein Bild des reellen Abbildes, wie es mittels der in den Figuren 1, 2 gezeigten Vorrichtung erzeugt werden kann, wobei der Reflektor Kügelchen mit einem Brechungsindex von 1,52 aufweist.

In den Figuren bezeichnen gleiche Bezugzeichen entsprechend ähnliche Teile.

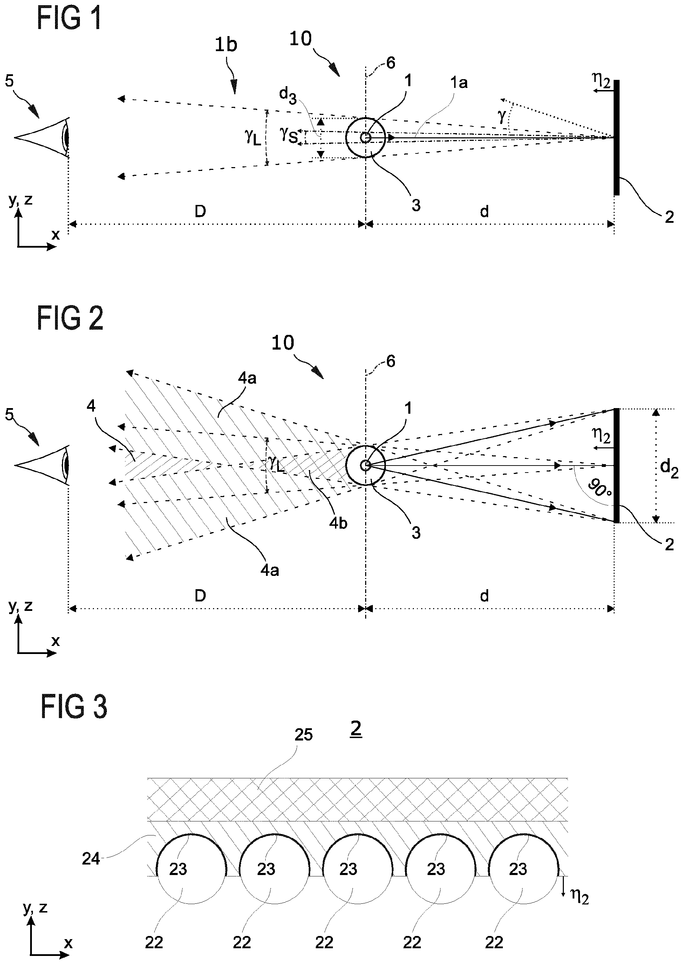

Fig. 1 und Fig. 2 zeigen schematische Querschnitte einer Vorrichtung 10 zum Beleuchten. In dem exemplarischen Ausführungsbeispiel wird die Vorrichtung 10 von einem Retroreflektor 2 und einer in einem Abstand d vor dem Retroreflektor 2 angeordneten Lichtquelle 1, bspw. einer LED, gebildet.

Aus Gründen der Übersichtlichkeit ist der Retroreflektor 2 in Fig. 1 und den folgenden ein ebener Retroreflektor, dessen retroreflektive Oberfläche eine von der Position auf der Oberfläche im Wesentlichen unabhängige mittlere Normalenrichtung $\eta_2$ hat. Außerdem wird zur besseren Orientierung häufig ein kartesisches Koordinatensystem xyz mit dargestellt.

Aus Gründen der Einfachheit wird die Vorrichtung 10 im Folgenden für einen Retroreflektor 2 beschrieben, dessen optische bzw. retroreflektiven Elemente kleine Kügelchen (Mikrokugeln) sind.

Die Vorrichtung 10 lässt sich jedoch, bei entsprechender Wahl der retroreflektiven Eigenschaften, auch für Retroreflektoren auf Basis von Mikro- Tripelprismen, Mikrospiegel-Arrays, d.h. von 2-dimensionalen Anordnungen von sogenannten phasenkonjugierenden Mikrospiegeln, oder prinzipiell mit Metamaterialien mit negativem Brechungsindex realisieren.

Fig. 3 zeigt einen typischerweise kleinen Ausschnitt eines Querschnitts durch einen Retroreflektor 2 auf Basis von Mikrokugeln 22 mit einem Brechungsindex von 1.6 oder höher. In dem exemplarischen Ausführungsbeispiel sind eine Vielzahl von Mikrokugeln 22, typischerweise Mikroglaskugeln 22, in eine Klebeschicht 24 eingebettet, die auf einer Trägerschicht 25 angeordnet ist. Dabei können die Mikrokügelchen 22 rückseitig mit einer als Spiegel wirkenden Metallschicht (Reflexionsschicht) 23 versehen sein.

Der Retroreflektor 2 kann als Retroreflektorfolie mit einer flexiblen Trägerschicht 25 ausgeführt sein. Außerdem kann der Schichtaufbau komplexer sein und/oder die Mikrokugeln vollständig eingebettet bzw. eingekapselt sein (z.B. in einer Wabenstruktur).

Für Retroreflektoren 2 deren Mikrokugeln 22 aus der Schicht 24 herausragen (z.B. als Halbkugeln) und die nicht abgedeckt sind, kann eine spekulare Reflexion auf der Oberfläche des Retroreflektors 2 weitgehend vermieden werden.

Wenn die Mikrokugeln in einer Schicht mit einem Brechungsindex $n_s$ eingebettet und/oder die zur Lichtquelle weisenden Kugelhälften von dieser umgeben sind, und der Brechungsindex $n_s$ größer als der von Luft ist, so wird der Brechungsindex n der Mikrokugeln typischerweise so gewählt, dass $n/n_s \geq 1{,}6$ ist.

Alternativ dazu, kann der Retroreflektor mikroprismatische optische Elemente aufweisen.

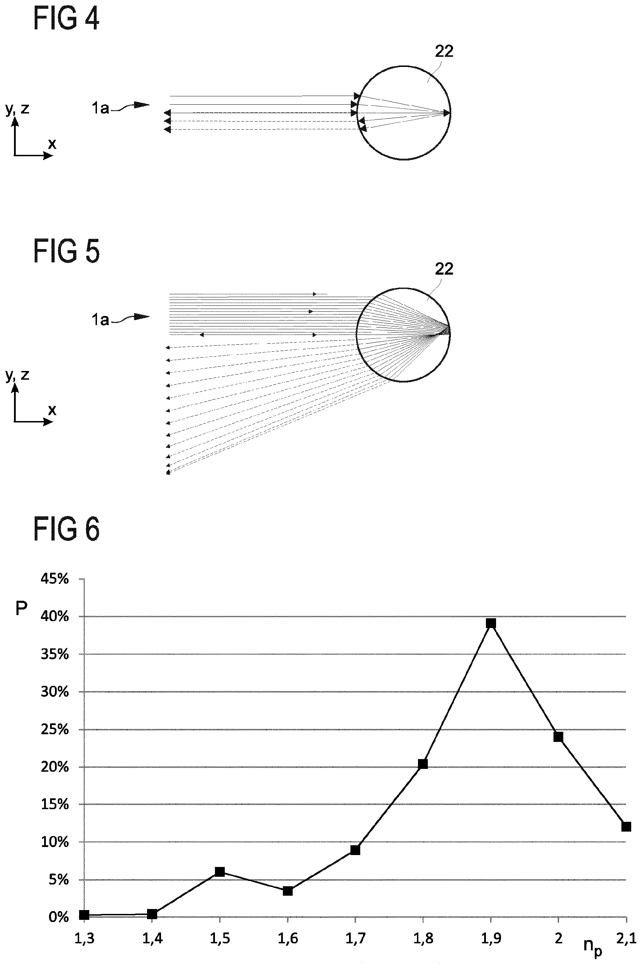

Die prinzipielle Funktionsweise optischer (retroreflektiver) Elemente wird nun mit Bezug zu den Figuren 4 und 5 für Mikrokugeln kurz erläutert.

Der Effekt kugelförmiger, optisch transparenter Körper, einen Teil des einfallenden Lichts mehr oder weniger exakt entlang seiner Einfallsrichtung zurück zu schicken, lässt sich strahlenoptisch durch zweimalige Brechung der Lichtstrahlen (beim Ein- und Austritt aus der Kugel) sowie einer einmaligen Reflexion (Spiegelung) an der Kugelrückseite erklären.

In Fig. 4 und Fig. 5, werden das von der nichtdargestellten Lichtquelle ausgehende und auf die jeweilige Mikrokugel 22 auftreffende Licht 1a durch auf die Mikrokugel 22 weisende Pfeile und das von der Mikrokugel 22 rückreflektierte Licht durch von der Mikrokugel 22 wegweisende Pfeile symbolisiert. Dabei werden aus Gründen der Übersichtlichkeit in Fig. 5 nur einige der einfallenden Lichtstrahlen mit Pfeilen versehen.

Bei der Reflexion an der Kugelrückseite wird nur ein Teil des Lichts zurückgeworfen, falls diese nicht verspiegelt, z.B. metallbedampft, ist. Aus Gründen der Übersichtlichkeit ist die typischerweise vorhandene spiegelnde Schicht in Fig. 4 und Fig. 5 ebenfalls nicht dargestellt.

An Hand strahlenoptischer Formeln lässt sich zeigen, dass sich parallele Strahlenbündel, die nur das Zentrum der Kugel 22 beleuchten (sogenannte paraxiale Strahlen), in einem Brennpunkt schneiden. Dieser Brennpunkt liegt für Brechungsindices n kleiner als 2,0 jenseits der hinteren Kugelgrenzfläche, für n = 2,00 exakt auf der hinteren Kugelgrenzfläche, und für n größer als 2,0 vor der hinteren Kugelgrenzfläche.

Für den in Fig. 4 dargestellten Fall einer Kugel 22 mit einem Brechungsindex von n = 2,0 verlassen die reflektierten Strahlen die Kugel 22 (anti-) parallel zu ihrer Einfallsrichtung.

Sobald die gesamte Kugel 22 beleuchtet wird (also auch ihre Randzonen) und / oder der Brechungsindex der Kugel 22 n vom Wert 2,0 abweicht, weicht auch die Ausbreitungsrichtung der reflektierten Strahlen von ihrer Einfallsrichtung ab. Dann werden selbst parallel einfallende Lichtstrahlen als ein Lichtkegel mit einem Öffnungswinkel zurückgeworfen. Dies ist in Fig. 5 für eine Kugel 22 mit einem Brechungsindex von n =1.52 dargestellt. Dieses Phänomen wird in der Literatur mitunter auch als "Streuung" und die Kügelchen dementsprechend als "Streuzentren" bezeichnet.

In der vorliegenden Anmeldung wurde zur Berechnung der Strahlenverläufe ein leistungsfähiges sogenanntes Raytracing-Programm verwendet. Damit können auch von der Dispersion, d.h. der Abhängigkeit des Brechungsindexes n von der Wellenlänge $\lambda$ (n = n ($\lambda$)), verursachte Effekte mit berücksichtigt werden.

Anders als beim Regenbogen, bei dem sich die Sonne als Lichtquelle hinter dem Rücken des Betrachters befindet und dessen Entstehung auch durch zweimalige Brechung der Lichtstrahlen und einmalige Reflexion erklärt werden kann, kann ein Beobachter (Betrachter) 5 das reelle Abbild 3 der Lichtquelle 1 der Vorrichtung 10 wahrnehmen, wenn er sich vom Retroreflektor 2 aus betrachtet hinter der Lichtquelle 1 befindet, wie in den Figuren 1 und 2 dargestellt wird.

Die von der Lichtquelle 1 ausgehenden Strahlenbündel 1a (von denen in Fig. 1 einer und in Fig. 2 drei dargestellt sind) werden von den in den Figuren 1 und 2 nichtdargestellten Mikrokugeln (optischen Elementen) des Retroreflektors 2 als Lichtkegel (gestrichelte Pfeile) mit einem Öffnungswinkel $\gamma_L$ in ihre Einfallsrichtung zurück reflektiert. Um die Lichtquelle 1 herum schneiden sich die Lichtkegel und formen dort eine Lichterscheinung bzw. "Lichtwolke" 3. Abbildungsoptisch entsteht am Ort der Lichtquelle 1 ein unscharfes, strukturiertes reelles Abbild 3 der Lichtquelle 1.

Das reelle Abbild 3 wird damit typischerweise in Ebenen 6 gebildet, die senkrecht zu einer Verbindungslinie zwischen dem Beobachter 5, der Lichtquelle 1 und dem Retroreflektor 2, z.B. bei der in Fig. 2 illustrierten zentralen Beobachterposition senkrecht zu einer kürzesten Verbindungslinie zwischen der Lichtquelle 1 und dem Retroreflektor 2 sind, und die die Lichtquelle 1 schneiden oder zumindest benachbart zur Lichtquelle 1 angeordnet sind.

Für in guter Näherung punktförmige Lichtquellen 1 und Mikrokugeln als optische Elemente des Retroreflektors 2 ist das reelle Abbild 3 etwa sphärisch.

Bei Verwendung eines Retroreflektors mit mikroprismatischen optischen Elementen, kann die Form der Lichterscheinung für den Beobachter aber auch sternförmig sein.

Ein Beobachter 5 kann das reelle Abbild 3 nur sehen, wenn sich sein Auge im Divergenzbereich 4, 4a der Lichtkegel befindet, d.h. die Verlängerung Auge 5 - Lichtquelle 1 auf dem Retroreflektor 2 endet. In einem an den Bereich 4 angrenzenden Teil des Bereich 4b ist das Abbild der Lichtquelle 1 noch sichtbar, wird aber von außen her an den äußeren Flanken angeschnitten. In einem dichter an der Lichtquelle 1 angeordneten Teil des Bereich 4b ist nur noch ein Teil des zentralen Maximums zu sehen. Die dreidimensionale Wirkung geht dort verloren und der Retroreflektor 2 erscheint als helle Fläche.

Die Helligkeit des reellen Abbilds 3 hängt stark vom Reflexionsvermögen der Mikrokugeln ab, jedoch nicht von der Größe des Retroreflektors 2, da das Auge (oder ein Detektor) immer nur jene Lichtstrahlen empfängt, die von den Mikrokugeln des Retroreflektor 2 unmittelbar hinter der Lichterscheinung 3 ausgehen, (welche die Lichtquelle 1 umgibt.)

Der Blickwinkelbereich, innerhalb dessen das reelle Abbild 3 überhaupt zu sehen ist, wird hingegen unmittelbar von der Ausdehnung (genauer den Ausdehnungen) $d_2$ des Retroreflektors 2 in Richtungen y, z bestimmt, die senkrecht zu dessen Normalenrichtung $\eta_2$ bzw. der kürzesten Verbindungslinie zwischen dem Retroreflektor 2 und der Lichtquelle 1 sind.

Darüber hinaus sollte eine Ausdehnung $d_1$ der Lichtquelle 1 bzw. eines Gehäuses der Lichtquelle 1, d.h. einer nichtstrahlenden Fassung der Lichtquelle 1, in Querschnitten, die auch den Retroreflektors 2 enthalten, möglichst gering sein ("lokalisierte" Lichtquelle). Anderenfalls wird das reelle Abbild 3 verdeckt. Diese Sichtbarkeitsbedingung lässt sich für Lichtquellen 1 auf LED- oder Halbleiterlaserbasis besonders leicht erfüllen.

Wie in Fig. 1 dargestellt wird, ist die Lichtquelle 1 daher so auszuwählen, dass ein Öffnungswinkel $\gamma_S$ der Lichtquelle 1 (inklusive ihres Gehäuses) vom Retroreflektor 2 bzw. dessen optischen Elementen aus betrachtet kleiner als ein jeweilige Öffnungswinkel $\gamma_L$ der rückreflektierten Lichtkegel ist.

Hingegen sind die Sichtbarkeitsvoraussetzungen für ein entsprechendes reelles Abbild nicht erfüllt, wenn z.B. der Lichtkegel eines Autoscheinwerfers von einem Verkehrszeichen mit Reflektor-Beschichtung reflektiert wird. Auch wenn sich ein Beobachter im Auto (oder dahinter) und damit hinter dem Autoscheinwerfer befindet, kann er kein reelles Abbild des Autoscheinwerfers sehen, da die Sichtbarkeitsbedingungen nicht erfüllt werden.

Eine genauere Analyse des in Fig. 2 dargestellten Ausführungsbeispiels zeigt, dass das reelle Abbild 3 in einem Beobachtungsbereich 4 vollständig als dreidimensionales Objekt, in den Bereichen 4a teilweise und im Bereich 4b nicht zu sehen bzw. größer ist als der Retroreflektor 2 und damit vom Beobachter 5 nicht dreidimensional wahrgenommen werden kann.

Der Beobachtungsbereich 4 kann für Personen begehbar sein und /oder sich in oder neben einem Gebäude befinden.

Bei der folgenden Beschreibung Struktur des reellen Abbilds 3 wird der Schwerpunkt auf die ("transversale") Struktur in einer zum Retroreflektor parallelen Ebene 6 (im Folgenden auch als Messebene bezeichnet) gelegt, die die Lichtquelle 1 zentral schneidet. In der Ebene 6 schneiden sich die reflektierten Strahlenbündel (Lichtkegel) und erzeugen somit die höchste Lichtintensität.

Das experimentell untersuchte Brechungsindex-Intervall lag dabei zwischen n = 1,52 (Standard-Glas) und n = 1,90 (Spezialglas), der Durchmesser w der Mikrokugeln 22 lag zwischen 40 $\mu$m und 150 $\mu$m. Der Abstand d zwischen der Retroreflektorfolie 2 und der Lichtquelle 1 bzw. der Messebene 6 variierte zwischen 50 mm und 500 mm.

Es zeigt sich, dass sich der Durchmesser $d_3$ des reellen Abbilds 3 in der Ebene 6 sehr gut aus dem Öffnungswinkel $\gamma_L$ des zentralen, von der Folie abgestrahlten Lichtkegels mittels strahlenoptischer Überlegungen bestimmen lässt. Die Formel für den Öffnungswinkel $\gamma_L$ lautet (für $1 \leq n \leq 2$ und einen näherungsweise angenommenen Brechungsindex von 1 für Luft):

$$\gamma_L = 8 * \sin^{-1}\sqrt{\frac{4-n^2}{3n^2}} - 4\cos^{-1}\sqrt{\frac{n^2-1}{3}} \qquad (1),$$

wobei $\sin^{-1}$ und $\cos^{-1}$ für die jeweiligen Umkehrfunktionen des Sinus und Cosinus stehen.

Für Mikrokugeln mit Brechungsindizes n von 1,52, 1,6, 1,7, 1,8 bzw. 1,9 ergeben sich Öffnungswinkel $\gamma_L$ von 42°, 30°, 18°, 9° bzw. 3°. Diese Werte stimmen gut mit den Messungen sowie mit den Raytracing-Simulationen überein, wobei der Durchmesser $d_3$ des reellen Abbilds 3 in der Ebene 6 zwischen zwei Punkten einer Linie bestimmt wird, die jeweils auf einer äußeren Flanke liegen und in denen die Lichtintensität den halben Wert des jeweils benachbarten ersten Maximums (Peaks) von außen annimmt (siehe unten). Auf Grund der inneren Struktur eignet sich diese Definition besser als die Halbwertsbreite.

Der Durchmesser $d_3$ des reellen Abbilds 3 ergibt sich dann zu:

$$d_3 = 2 * d * \tan(\gamma_L/2) \qquad (2).$$

Damit ist der Durchmessers $d_3$ des reellen Abbilds 3 unabhängig vom Durchmesser der Mikrokugeln 1, was experimentell bestätigt werden konnte.

Der Beobachtungsbereich 4 wächst mit der Ausdehnung $d_2$ des Retroreflektors 2, wobei $d_2 > d_3$ zu wählen ist. Außerdem wird aus geometrischen Gründen für einen gegebenen Abstand D des Betrachters 5 von der Lichtquelle 1 $d_2 \geq d_3*(1+d/D)$ gewählt.

Ebenso wird aus geometrischen Gründen die Ausdehnung $d_1$ der Lichtquelle 1 in zu einer kürzesten Verbindungslinie zwischen der Lichtquelle 1 und dem Retroreflektor 2 orthogonalen Richtungen y, z kleiner als die entsprechende(n) Ausdehnung(en) $d_3$ gewählt. Dementsprechend wird die Lichtquelle 1 von jeweiligen inneren Teilkegeln der von der Folie rückgestrahlten Lichtkegel vollständig bestrahlt.

Um bei den beschriebenen geometrischen Verhältnissen einen möglichst großen Beobachtungsbereich 4 zu erzeugen, ist typischerweise zumindest eine der Ausdehnungen $d_2$ des Retroreflektors 2 in y- bzw. z-Richtung größer als 5 cm.

Beispielsweise kann ein Beobachter 5, der sich zentral in einem Abstand D von mindestens 30 cm vor einer als Punktlichtquelle beschreibbaren Lichtquelle 1 befindet, die in einem Abstand d von 50 cm vor einem 40 cm x 40 cm großen Retroreflektor 2 ($d_2$ = 40 cm) auf Basis von Mikrokugeln mit einem Brechungsindex von 1,87 (entspricht einem Öffnungswinkel $\gamma_L$ von ca. 4,5°) angeordnet ist, eine beeindruckende 3-dimensionale Lichterscheinung 3 mit einem Durchmesser $d_3$ von etwa 39 mm wahrnehmen.

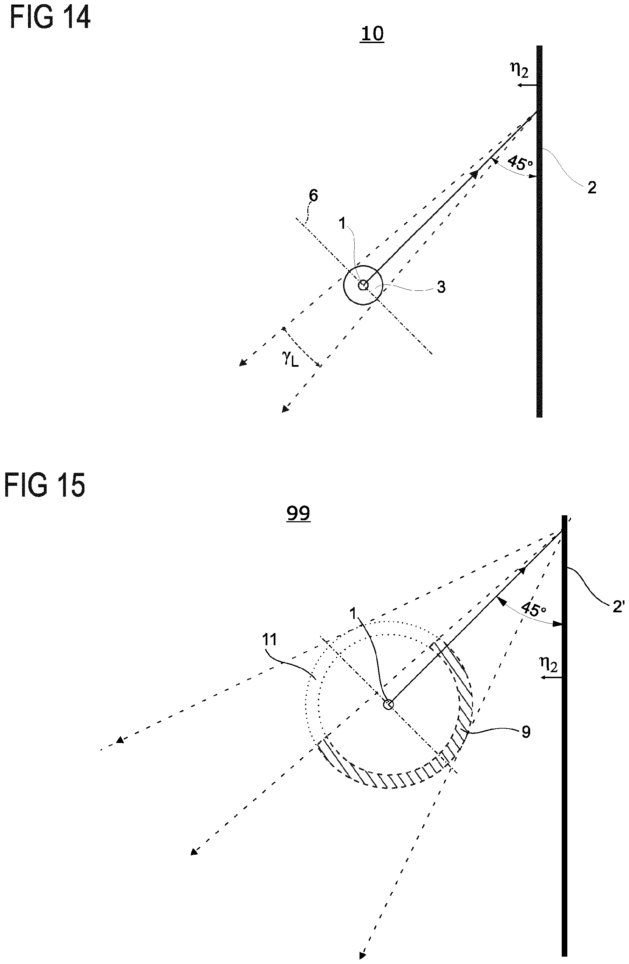

Aufgrund der Verwendung höherbrechender Mikrokugeln wird die Blickwinkelstabilität der Vorrichtung 10 deutlich verbessert wie ein Vergleich der Figuren 14 und 15 zeigt.

Während die hochbrechenden Mikrokugeln des Retroreflektors 2 der Vorrichtung 10 auch eine Beobachtung des reellen Abbilds 3 in einem Winkelbereich von $\pm45°$ zur Flächennormale $\eta_2$ des Retroreflektors 2 erlauben (Fig. 14), ist bei der in Fig. 15 gezeigten Vorrichtung 99 mit einem Reflektor 2' auf Basis niedrigbrechender Mikrokugeln bei Winkeln $\pm45°$ nur ein Teil 9 einer Lichterscheinung 9, 11 zu sehen, die bei senkrechter Aufsicht auf den Reflektor 2' komplett zu sehen wäre.

Fig. 6 zeigt die optische Leistung, die von einer rückseitig verspiegelten Mikrokugel 22 in Abhängigkeit von deren Brechungsindex n zurückgeworfen wird und von einem 10 mm x 10 mm großen Detektor in der Ebene 6 bei einem Abstand d von 100 mm zwischen der Lichtquelle 1 und der Mikrokugel 22 detektiert werden kann gemäß einer strahlenoptischen Simulation für grünes Licht bei 532 nm. Die optische Leistung ist in Fig. 6 in Prozentwerten angegeben. Sie hat ein ausgeprägtes Maximum bei einem Brechungsindex n von etwa 1.9.

Für einen Beobachter ist daher eine besonders hohe Helligkeit des reellen Abbilds 3 der Lichtquelle (1) zu erwarten, wenn der Brechungsindex n der Mikrokugel(n) in einem Bereich von 1,7 bis 2,3, noch typischer in einem Bereich von 1,8 bis 2,0 liegt.

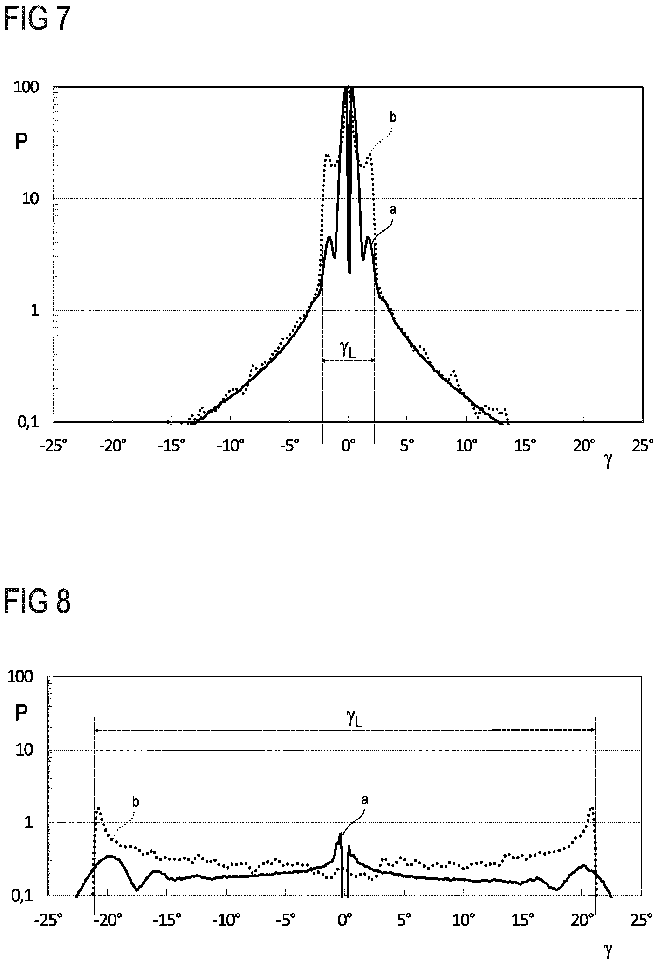

Fig. 7 zeigt ein gemessenes Leistungsprofil (durchgezogene Kurve a) des reellen Abbildes 3, das mittels der in Fig. 1 und Fig. 2 gezeigten Vorrichtung 10 und einer weißen LED als Lichtquelle 1 erzeugt wurde, sowie ein mittels Raytracing-Programm berechnetes Leistungsprofil (gepunktete Kurve b). Der Durchmesser w und der Brechungsindex n der Mikrokugeln 22 des Retroreflektors betragen (im Mittel) 50 $\mu$m und 1,87. Der Retroreflexionskoeffizient der zur Messung verwendeten Retroreflektorfolie betrug etwa 400 cd/(lx m$^2$) für weißes Licht.

Fig. 17 zeigt ein zugehöriges Foto des reellen Abbildes 3, das vom Beobachtungsbereich aus mit dem Retroreflektor 2 als Hintergrund aufgenommen wurde. Der besondere, dreidimensionale Eindruck des um die Lichtquelle 1 schwebenden reellen Abbildes 3 kann auf dem zweidimensionalen Foto nur ungenügend wiedergegeben werden. In Fig.17 wird die LED im Beobachtungsbereich von einer Halterung 7 verdeckt, so das Primärstrahlen der Lichtquelle nicht zum Beobachter / Detektor gelangen können. Die Kurve a in Fig. 7 korrespondiert zur Leistung des reellen Abbilds 3 in relativen Einheiten entlang einer horizontalen Linie durch das reelle Abbild 3 in Fig. 17, die die verdeckte LED mittig schneidet.

Die Halterung 7 schwächt auch das reelle Abbild 3 ab, sodass sich in Fig. 7 ein lokales Minimum bei $\gamma=0°$ ergibt. Dabei bezeichnet $\gamma$ einen Beobachtungswinkel zwischen dem Detektor bzw. Beobachter und der kürzesten Verbindungslinie zwischen der Lichtquelle 1 und dem Retroreflektor.

Die gemessene Kurve a stimmt gut mit der simulierten Kurve b überein. Außerdem liefern beide Kurven eine Breite $\gamma_L$ von 4,3° des reellen Abbildes 3, die zwischen den Punkten der halben äußeren Flankenhöhe gemessen wird, die gut mit dem gemäß Gleichung 1 bestimmten Wert von 4,5° für n = 1,87 übereinstimmt.

Außerdem ist das reelle Abbild 3 besser fokussiert und mehr als eine Größenordnung heller als für Reflektoren auf Basis von Mikrokugeln mit einem Brechungsindex n von 1,52, wie der Vergleich mit den unter den - vom Brechungsindex der Mikrokugeln abgesehen - jeweils gleichen Bedingungen bestimmten Figuren 8 und 18 ergibt.

Darin zeigt Fig. 8 ein gemessenes Leistungsprofil (durchgezogene Kurve a) des reellen Abbildes 3, das mittels der in Fig. 1 und Fig. 2 gezeigten Vorrichtung 10 und einer weißen LED als Lichtquelle 1 erzeugt wurde, sowie ein mittels Raytracing-Programm berechnetes Leistungsprofil für grünes Licht bei 532 nm (gepunktete Kurve b), und Fig. 17 ein zugehöriges Foto des reellen Abbildes 3, das vom Beobachtungsbereich aus mit dem Reflektor 2 als Hintergrund aufgenommen wurde.

Die in Fig. 8 gezeigten Kurven a, b liefern eine Breite $\gamma_L$ des reellen Abbilds 3 von 42,5° (Kurve a, goniometrische Messung) bzw. 42,3 (Kurve b, Simulation), was gut mit dem gemäß Gleichung 1 bestimmten Wert von 42,2° für n = 1,52 übereinstimmt. Der Retroreflexionskoeffizient der zur Messung verwendeten Folie lag unterhalb von 3 cd/(lx m²) für weißes Licht.

Insgesamt lässt sich die Ausdehnung der reellen Abbilder 3 über die Lage der äußeren Flanken zuverlässig bestimmen.

Im Vergleich zu Retroreflektoren mit höher brechenden Mikrokugeln, ist das reelle Abbild 3 für Reflektoren mit Mikrokugeln, die einen Brechungsindex unterhalb von 1,6 haben, leuchtschwach und kontrastarm.

Typischerweise werden mit wachsendem Brechungsindex n die rückgestrahlten Lichtkegel enger ($\gamma_L$ kleiner, siehe Gleichung (1)), und es bildet sich ein deutliches Zentralmaximum mit sich im Sockelbereich abflachenden Flanken aus. Die strahlenoptische Vorhersage, dass die Ausdehnung der reellen Abbilder 3 vom Durchmesser der Mikrokugeln kaum beeinflusst wird, konnte experimentell verifiziert werden.

Allerdings ändern sich mit dem Durchmesser der Mikrokugeln die Flankensteilheit und die Substruktur der der reellen Abbilder 3, was zumindest teilweise mit Beugungs- und Interferenzeffekten im Rahmen der Wellenoptik erklärt werden kann.

Beim Einsatz von mehrfarbigen oder weißen Lichtquellen kommt zusätzlich zum Tragen, dass der Brechungsindex n mit sinkender Wellenlänge wächst (Dispersion), typischerweise gilt z.B. n(rot) < n(blau). Da sich die rückgestrahlten Lichtkegel mit steigendem Brechungsindex n verjüngen, bildet sich bei Verwendung weißer Lichtquellen 1 an den Rändern der reellen Abbilder 3 ein rötlicher Saum aus.

Über die Bestimmung von $\gamma_L$ und die durch die Dispersion verursachte typischen Farbsäume lassen sich Rückschlüsse auf den Brechungsindex und die Größe der verwendeten Mikrokugeln ziehen. Dies kann daher auch für wissenschaftliche Untersuchungen und für Materialbestimmungen hilfreich sein.

In einem wellenoptischen Bild kann die Mikrokugel in einer ersten Abschätzung als runde Blendenöffnung einer dem Durchmesser der Mikrokugel w entsprechenden Weite w betrachtet werden, an der die einfallende Lichtwelle gebeugt wird. Die winkelabhängige Intensität $I(\gamma)$ ergibt sich dann zu

$$I(\gamma) = I(0)\left(\frac{4\,J_1(0{,}5\,k\,n\,w\,\sin\gamma)}{k\,n\,w\,\sin\gamma}\right)^2 \qquad (3)$$

mit der Wellenzahl k=2*π/λ zur Wellenlänge λ der einfallenden Lichtwelle. Dabei ist $J_1$ die Bessel-Funktion 1. Ordnung und $I(0)$ die Intensität auf der Achse ($\gamma$=0). Die Formel (3) beschreibt das sog. AIRYsche Beugungsscheibchen. Seine ersten beiden Nullstellen ergeben sich zu:

$$\gamma_1 = \pm\sin^{-1}(1{,}22\,\lambda\,/\,w),$$

und

$$\gamma_2 = \pm\sin^{-1}(2{,}23\,\lambda\,/\,w).$$

Für λ = 534nm (grün) und w = 40 μm ergibt sich $\gamma_1$ = ±0,9° und für λ = 534nm (grün) und w = 120 μm ergibt sich $\gamma_1$ = ±0,3°. Die kleinen Winkelwerte zeigen, dass Beugungseffekte nur die Substruktur der reellen Abbilder 3 beeinflussen.

Je kleiner die Mikrokugel und je größer die Wellenlänge λ der Lichtquelle ist, umso breiter das zentrale Maximum des AIRYschen Beugungsscheibchens Da die Breite des zentralen Maximums mit der Wellenlänge steigt, weisen das zentrale Maximum, und die nachfolgenden Ringe, bei Verwendung weißer Lichtquellen einen roten äußeren Rand auf. Dieser Effekt ist nur bei einigen Substrukturen innerhalb des unscharfen reellen Bildes der Lichtquelle zu beobachten.

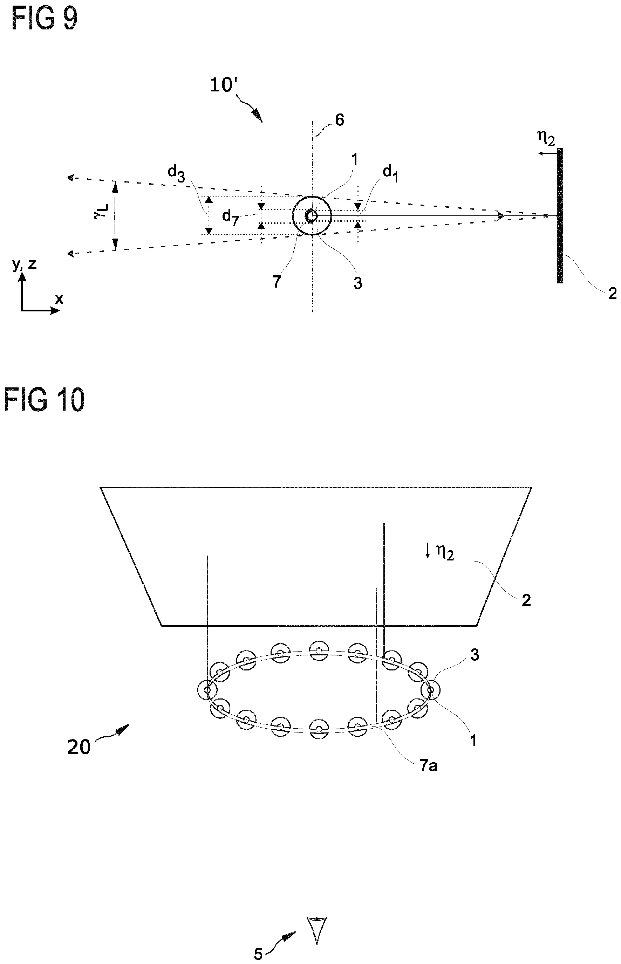

Fig. 9 zeigt einen schematischen Querschnitt einer Vorrichtung 10'. Die Vorrichtung 10' ist ähnlich zu der in den Figuren 1 und 2 dargestellten Vorrichtung 10, hat aber zusätzlich ein Abschirmelement 7, das vom Retroreflektor 2 aus betrachtet hinter der Lichtquelle 1 und auf einer Linie angeordnet ist, die eine kürzeste Verlängerungslinie zwischen dem Retroreflektor 2 und der Lichtquelle 1 bildet.

Typischerweise wird, in zu einer kürzesten Verbindungslinie zwischen der Lichtquelle 1 und dem Retroreflektor 2 orthogonalen Richtungen y, z, sowohl die Ausdehnung $d_1$ der Lichtquelle 1 als auch die Ausdehnung $d_7$ des Abschirmelementes 7 kleiner als die Ausdehnung $d_3$, der mit der Vorrichtung 10' erzeugbaren Lichterscheinung 3, gewählt.

In dem exemplarischen Ausführungsbeispiel ist das Abschirmelement 7 im Querschnitt halbkreisförmig. Durch das Abschirmelement 7 kann das Abstrahlen von Primärstrahlung der Lichtquelle 1 in den links der Ebene 6 gelegen Halbraum (und damit in den Beobachtungsbereich) verhindert werden. Eine derartige Anordnung ist besonders für den Aufbau entblendeter Leuchten aber auch für Anzeigevorrichtungen interessant.

Fig. 10 zeigt eine perspektivische Ansicht einer Leuchte 10. Die Leuchte 10 hat einen Retroreflektor 2 mit einem Retroreflexionskoeffizienten von typischerweise zumindest 10 cd/(lx m$^2$) und eine Vielzahl vor dem Retroreflektor 2 angeordnete Lichtquellen 1, z.B. LEDs, von denen aus Gründen der Übersichtlichkeit aber nur eine mit dem Bezugszeichen 1 versehen wurde.

In dem exemplarischen Ausführungsbeispiel ist die Leuchte eine Deckenleuchte. Dementsprechend kann der Retroreflektor 2 unterhalb und/oder an der nichtdargestellten Decke eines Raumes angebracht werden. Auf eine Darstellung elektrischer Versorgungsleitungen und einer typischerweise vorhandenen Ansteuerelektronik für Lichtquellen 1 wird aus Gründen der Übersichtlichkeit in Fig. 10 verzichtet.

Die Lichtquellen 1 sind an einem exemplarischen Ring 7a befestigt, der seinerseits über drei oder mehr Seile, Ketten oder Stangen (vertikale Linien in Fig. 10) mit dem Retroreflektor 2 verbunden ist.

Die Lichtquellen 1 sind in senkrechter Projektion auf den Retroreflektor typischerweise in einem zentralen Bereich des Retroreflektors angeordnet.

Der Ring 7a kann auch die Funktion eines Abschirmelements für die Lichtquellen übernehmen. Alternativ dazu, kann auch je Lichtquelle 1 ein Abschirmelement vorgesehen sein. In diesen Ausführungsbeispielen wird ein Beobachter 5 der sich unterhalb der Leuchte 20 befindet nicht von Primärstrahlen der Lichtquellen 1 geblendet, sondern sieht nur die reellen Abbilder 3 der Lichtquellen 1.

Befindet sich der Beobachter 5 außerhalb des Sichtbarkeitsbereichs, d.h. die Lichtquellen 1 befinden sich aus seiner Position gesehen nicht vor dem Retroreflektor, sind weder die Lichtquellen 1 noch deren reelle Abbilder 3 zu sehen. Somit kann eine sehr gute Entblendung z.B. einer Arbeitsflächenbeleuchtung erreicht werden.

Der Abstand der Lichtquellen 1 zur retroreflektierenden Fläche des Retroreflektors 2 kann verstellbar sein. Damit lässt sich die Größe der reellen Abbilder 3 einstellen.

Die Anzahl und Anordnung der Lichtquellen 1 kann vom geplanten Einsatzort bzw. vom Typ der Leuchte abhängen.

Andere Ausführungsbeispiele für Innenraumleuchten mit einem Retroreflektor und einer oder mehreren vor dem Retroreflektor angeordneten Lichtquellen 1 beziehen sich auf Arbeitsplatzleuchte, z.B. eine Schreibtischleuchte, eine Leseleuchte oder eine Leuchte für medizinische Anwendungen (z.B. Operationsleuchte).

Ein weiteres Anwendungsbeispiel ist die Verwendung der Lichterscheinung als schwebender Schalter. Dabei wird z.B. über einen Lichtsensor eine Unterbrechung der Lichtstrahlen 1a von der Lichtquelle 1 zum Retroreflektor 2 als Signal detektiert. Mit Unterbrechung der Lichtstrahlen 1a ist auch die Lichterscheinung 3 nicht mehr sichtbar.

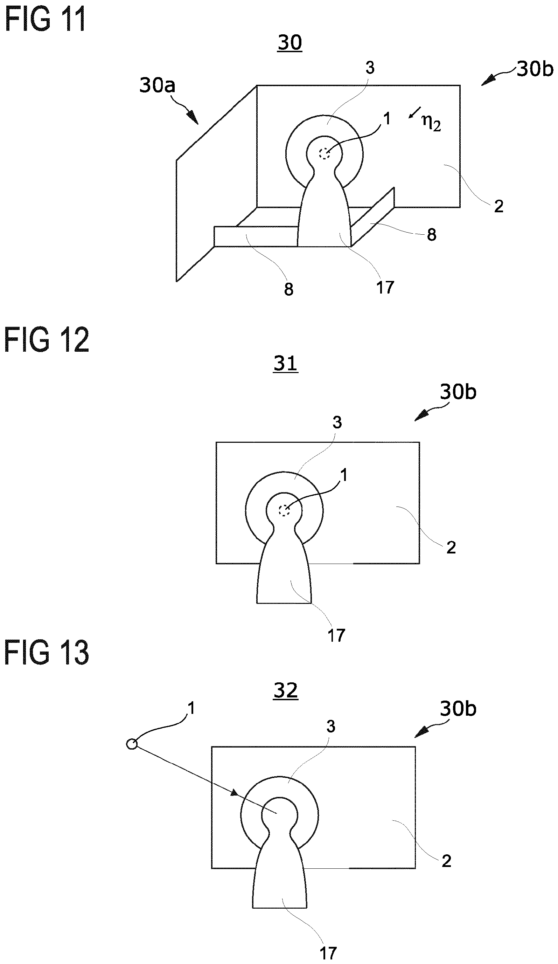

Fig. 11 zeigt eine perspektivische Ansicht einer Klappkarte 30 mit zwei gegeneinander klappbaren Klappteilen 30a, 30b.

In dem exemplarischen Ausführungsbeispiel ist auf der Innenseite des hinteren Klappteils 30b ein Retroreflektor 2 aufgebracht bzw. das hintere Klappteil 30b als Retroreflektor 2 ausgeführt.

Der Retroreflektor 2 hat typischerweise einen Retroreflexionskoeffizienten von zumindest 10 cd/(lx m$^2$).

Auf Grund der gewünschten geringen Dicken, ist der Retroreflektor 2 der Karte 30 zudem typischerweise als Retroreflektorfolie ausgeführt.

Wenn die Karte 30 aufgeklappt wird, wird eine über Verbindungselemente 8 (z.B. Papier- oder Pappstreifen) an den Klappteilen 30a, 30b gehaltene, exemplarisch als Figur ausgeführte Haltestruktur 17 vor dem Retroreflektor 2 positioniert, auf deren Rückseite im Kopfbereich der Figur 17 eine durch die Haltestruktur 17 verdeckte und als gestrichelter Kreis dargestellte Lichtquelle 1 angeordnet ist, z.B. eine LED oder eine OLED.

Auf eine Darstellung elektrischer Versorgungsleitungen, eines elektrischen Energiespeichers und einer typischerweise vorhandenen Ansteuerelektronik für die Lichtquelle 1 ist aus Gründen der Übersichtlichkeit in Fig. 11 ebenfalls verzichtet worden.

Wenn durch das Aufklappen der Karte 30, oder das Bedienen eines nichtdargestellten Schalters die Lichtquelle 1 aktiviert wird, entsteht ein reelles Abbild 3 der Lichtquelle 1, das bei einem Betrachter, der die Karte 30 bspw. in der dargestellten Perspektive sieht, den Eindruck eines teilweise den Kopf der Figur 17 umgebenden Heiligenscheins hervorruft. Dies ist jedoch nur als ein nichtbegrenzendes Beispiel zu verstehen. Je nach Typ von Karte kann die Haltestruktur 17 auch andere Formen annehmen, z.B. die einer Kerze bei einer Glückwunschkarte, mehrere mit einer jeweiligen Lichtquelle 1 ausgerüstete Haltestrukturen 17 und / oder mehrere Lichtquellen 1 pro Haltestruktur 17 vorgesehen sein.

Außerdem kann vorgesehen sein, dass der Retroreflektor 2 Schriftzüge und / oder Bilder wiedergibt. Dies kann bspw. über eine Einlagerung von Pigmenten in den Retroreflektor 2 realisiert werden.

Weiterhin kann der Retroreflektor strukturiert und /oder fragmentiert sein.

Ein Retroreflektor mit integrierten Schriftzügen und / oder Bildern und davor angeordneten, typischerweise befestigten Lichtquelle(n) kann auch als Anzeigevorrichtung, z.B. für Werbezwecke oder für gestalterische Zwecke verwendet werden. Beispielsweise kann eine derartige Anzeigevorrichtung eine entsprechend gestaltete Retroreflektorfolie aufweisen oder der Retroreflektor von einem retroreflektierenden Betonelement, z.B. einem Fassadenteil eines Gebäudes oder einer Mauer gebildet werden.

Wie in Fig. 12 gezeigt wird, kann die Karte 31 auch eine einfache Karte 30b mit einer retroreflektierenden Ansichtsseite 2 und einer davor positionierbaren Haltestruktur 17 mit rückseitiger Lichtquelle 1 sein, z.B. ein Set aus der Karte 30b und einer separaten Haltestruktur 17 mit rückseitiger Lichtquelle 1. Es kann aber auch vorgesehen sein, dass die Karte 30b und die Haltestruktur 17 über ein in Fig. 12 nicht dargestelltes Verbindungselement miteinander mechanisch verbunden sind.

Wie in Fig. 13 gezeigt wird, kann die Lichtquelle 1 einer Karte 32 mit einer retroreflektierenden Ansichtsseite 2 und einer davor positionierbaren Figur 17 sogar separat von der Figur 17 angeordnet sein. In diesem Ausführungsbeispiel weist die Anzeigevorrichtung bzw. Karte 32 typischerweise zumindest einen Retroreflektor 2 mit einem Retroreflexionskoeffizienten von typischerweise zumindest 10 cd/(lx m$^2$) und eine vor dem Retroreflektor 2 angeordnete Figur 17 auf.

Gemäß einem Ausführungsbeispiel weist eine Karte, bspw. eine Glückwunschkarte, eine Ansichtsseite 2 umfassend retroreflektierende Partikel und eine vor der Ansichtsseite 2 positionierbare Lichtquelle 1, typischerweise eine Kerze, eine LED oder eine OLED, auf, die die Ansichtsseite 2 in einem aktivierten Zustand beleuchten kann, derart, dass die Lichtquelle 1 zumindest teilweise von einem reellen Abbild 3 der Lichtquelle 1 umgeben ist.

Gemäß einem Ausführungsbeispiel umfasst ein Verfahren zum Beleuchten das Anordnen einer Lichtquelle vor einem Retroreflektor, sodass Licht, das bei aktivierter Lichtquelle von der Lichtquelle ausgeht und vom Retroreflektor zurückgeworfen wird, eine beobachtbare 3-dimensionale Lichterscheinung bildet, die die Lichtquelle zumindest teilweise umgibt, und die bezüglich einer Verbindungslinie zwischen der Lichtquelle und dem Retroreflektor einen Öffnungswinkel kleiner als 30° aufweist.

Gemäß einem Ausführungsbeispiel umfasst eine Vorrichtung zum Beleuchten eine Lichtquelle zum Aussenden von Licht aufweisend eine Wellenlänge aus einem Bereich von 380 nm bis 780 nm, und einen mit der Lichtquelle (1) mechanisch verbundenen Retroreflektor (2) mit einem Rückstrahlwert von zumindest 10 cd/(lx m$^2$) bei der Wellenlänge, wobei der Retroreflektor optische Elemente mit einem Brechungsindex von zumindest 1,6 bei der Wellenlänge aufweist, wobei die Lichtquelle so vor dem Retroreflektor angeordnet ist, dass ein Öffnungswinkel der Lichtquelle von einem optischen Element des Retroreflektors aus betrachtet kleiner als ein Öffnungswinkel eines von dem optischen Element auf die Lichtquelle rückreflektierbaren Lichtkegels ist.

Gemäß einem Ausführungsbeispiel umfasst eine Vorrichtung zum Beleuchten einen Retroreflektor und eine vor dem Retroreflektor angeordnete Lichtquelle, sodass Licht, das von der Lichtquelle ausgeht und vom Retroreflektor zurückgeworfen wird, eine von einem vom Retroreflektor aus betrachtet hinter der Lichtquelle gelegenen Beobachtungsbereich aus beobachtbare Lichterscheinung in einer Ebene, die senkrecht zu einer Verbindungslinie zwischen dem Retroreflektor und der Lichtquelle ist, bilden kann, wobei die Ebene zwischen dem Retroreflektor und der Lichtquelle angeordnet ist oder die Lichtquelle schneidet, und wobei die Lichterscheinung bezüglich der Verbindungslinie einen Öffnungswinkel aufweist, der maximal 30° beträgt.

Fig. 16 zeigt eine perspektivische Ansicht eines Goniometers 100 zur Messung optischer Eigenschaften von Retroreflektoren 2 auf der Grundlage des CIE-Winkelsystems. Der Winkel $\alpha$ bezeichnet den Winkel zwischen der Beleuchtungsachse (Gerade von einem Bezugsmittelpunkt zum Mittelpunkt der Lichtquelle 1) und der Beobachtungsachse (Gerade vom Bezugsmittelpunkt zum Mittelpunkt eines Detektorkopfes 5a), der Winkel $\varepsilon$ den Verdrehungswinkel und die Winkel $\beta1$ und $\beta2$ orthogonale Komponenten des Winkels zwischen der Beleuchtungsachse und einer Bezugsachse $\eta$ (Gerade, die vom Bezugsmittelpunkt ausgeht). Der in Fig. 1 dargestellte Winkel $\gamma$ kann zu einem der beiden Winkel $\beta1$ und $\beta2$ korrespondieren.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche definieren die Erfindung.

**Patentansprüche**

1. Vorrichtung zum Beleuchten (10, 10', 20), umfassend:

    - eine Lichtquelle (1) zum Aussenden von Licht aufweisend eine Wellenlänge aus einem Bereich von 380 nm bis 780 nm;
    - einen mit der Lichtquelle (1) mechanisch verbundenen Retroreflektor (2) mit einem Retroreflexionskoeffizienten von zumindest 10 cd/(lx m$^2$) bei der Wellenlänge, wobei der Retroreflektor (2) optische Elemente (22) mit einem Brechungsindex in einem Bereich von 1,6 bis 1,97 bei der Wellenlänge aufweist, wobei die optischen Elemente (22) Kügelchen sind; und
    - ein Abschirmelement (7, 17), das so angeordnet ist, dass von der Lichtquelle (1) in allen vom Retroreflektor (2) wegweisenden Richtungen ausgesandtes Licht vom Abschirmelement (7, 17) reflektiert und / oder absorbiert wird.

2. Vorrichtung nach Anspruch 1, wobei der Brechungsindex der optischen Elemente (22) in einem Bereich von 1,68 bis 1,97 liegt.

3. Vorrichtung nach Anspruch 1 oder 2, wobei die optischen Elemente (22) Mikrokugeln sind, Glaskugeln oder Kunststoffkugeln sind, wobei die optischen Elemente (22) teilweise von einer das Licht reflektierenden Schicht umgeben sind, und / oder wobei der Retroreflektor (2) eine Retroreflektorfolie (2) ist.

4. Vorrichtung nach einem der vorangegangenen Ansprüche, wobei die Lichtquelle von einer LED oder einer OLED gebildet wird.

5. Vorrichtung nach Anspruch 4, wobei das Abschirmelement von der LED oder der OLED bereitgestellt wird, die Licht nur in einen Halbraum abgibt.

6. Vorrichtung nach einem der vorangegangenen Ansprüche, wobei der Retroreflektor (2) so vor der Lichtquelle (1) angeordnet ist, dass Licht, das von der Lichtquelle (1) ausgeht und vom Retroreflektor (2) zurückgeworfen wird, eine beobachtbare Lichterscheinung (3) in einer Ebene (6), die zwischen dem Retroreflektor (2) und der Lichtquelle (1) angeordnet ist oder die Lichtquelle (1) schneidet, bilden kann, wobei die Lichterscheinung (3) bezüglich einer Verbindungslinie zwischen der Lichtquelle (1) und dem Retroreflektor (2) einen Öffnungswinkel ($\gamma_L$), der maximal 30° beträgt, aufweist, und/oder wobei die Lichterscheinung (3) in der Ebene (6) einen Durchmesser ($d_3$), der kleiner ist als eine Ausdehnung ($d_2$) des Retroreflektors (2) in einer zur Verbindungslinie senkrechten Richtung, aufweist.

7. Vorrichtung nach einem der vorangegangenen Ansprüche, wobei die Lichtquelle (1) in einem Abstand (d) vor dem Retroreflektor (2) angeordnet ist, wobei eine Ausdehnung der Lichtquelle (1) senkrecht zu einer Normalenrichtung des Retroreflektors (2) gleich oder kleiner als ein Drittel des Abstands (d) ist, wobei ein mit der Vorrichtung erzeugbares, die Lichtquelle (1) zumindest teilweise umgebendes, reelles Abbild (3) der Lichtquelle (1) bezüglich einer Verbindungslinie zwischen der Lichtquelle (1) und dem Retroreflektor (2) einen Öffnungswinkel ($\gamma_L$) kleiner als 30° aufweist, wobei die Lichtquelle (1) in einem aktivierten Zustand eine leuchtende Fläche von weniger als 1 cm$^2$ aufweist, und/oder wobei die Lichtquelle (1) in einer senkrechten Projektion auf den Retroreflektor (2) innerhalb des Retroreflektors (2) und von einem Rand des Retroreflektors (2) beabstandet angeordnet ist.

8. Vorrichtung nach einem der vorangegangenen Ansprüche, umfassend mehrere vor dem Retroreflektor (2) angeordnete Lichtquellen (1), und für jede der Lichtquellen (1) ein Abschirmelement (7, 17), das so angeordnet ist, dass von der jeweiligen Lichtquelle (1) in allen vom Retroreflektor (2) wegweisenden Richtungen ausgesandtes Licht vom Abschirmelement (7, 17) reflektiert und / oder absorbiert wird.

9. Vorrichtung nach einem der vorangegangenen Ansprüche, wobei der Retroreflektor (2) eine retroreflektive Oberfläche aufweist, die eine von der Position auf der retroreflektive Oberfläche im Wesentlichen unabhängige mittlere Normalenrichtung ($\eta_2$) hat.

10. Vorrichtung nach einem der vorangegangenen Ansprüche, wobei die Lichtquelle (1) so vor dem Retroreflektor (2) angeordnet ist, dass die Lichtquelle (1) von zumindest einem optischen Element (22) des Retroreflektors (2) aus betrachtet einen Winkel ($\gamma_S$) einnimmt, der kleiner als ein Öffnungswinkel ($\gamma_L$) eines von dem zumindest einem optischen Element (22) auf die Lichtquelle (1) rückreflektierbaren Lichtkegels ist, und/oder wobei die Lichtquelle (1) von einem inneren Teilkegel des rückreflektierbaren Lichtkegels vollständig bestrahlt wird.

11. Vorrichtung nach einem der vorangegangenen Ansprüche, wobei die Lichtquelle (1) so vor dem Retroreflektor (2) angeordnet ist, dass Licht, das von der Lichtquelle (1) ausgeht und vom Retroreflektor (2) zurückgeworfen wird, eine von einem vom Retroreflektor (2) aus betrachtet hinter der Lichtquelle (1) gelegenen Beobachtungsbereich (4) aus beobachtbare Lichterscheinung (3) bildet.

12. Vorrichtung nach einem der vorangegangenen Ansprüche, wobei die Vorrichtung eine Leuchte (20) ist, insbesondere eine entblendete Leuchte ist.

13. Vorrichtung nach einem der Ansprüche 1 bis 11, wobei die Vorrichtung eine Anzeigevorrichtung ist, und/oder wobei der Retroreflektor (2) eine Anzeigefläche bildet.

14. Karte (30, 31, 32), umfassend:

- eine Vorrichtung nach einem der Ansprüche 1 bis 4,
wobei die Lichtquelle (1) so vor dem Retroreflektor (2) angeordnet ist, dass Licht, das von der Lichtquelle (1) ausgeht und vom Retroreflektor (2) zurückgeworfen wird, eine beobachtbare Lichterscheinung (3) in einer Ebene (6) bildet, wobei die Ebene (6) zwischen dem Retroreflektor (2) und der Lichtquelle (1) angeordnet ist oder die Lichtquelle (1) schneidet, und wobei die Lichterscheinung (3) bezüglich einer Verbindungslinie zwischen der Lichtquelle (1) und dem Retroreflektor (2) einen Öffnungswinkel ($\gamma_L$) aufweist, der in einem Bereich von 0.5° bis 30° liegt, und
wobei das Abschirmelement als eine vor dem Retroreflektor (2) angeordnete Haltestruktur (17) ausgebildet ist, an deren, zum Retroreflektor (2) weisenden Rückseite die Lichtquelle (1) angebracht ist, sodass die Lichtquelle (1) durch die Haltestruktur (17) in einer Aufsicht auf die Haltestruktur (17) und den Retroreflektor (2) verdeckt wird.

15. Karte nach Anspruch 14, wobei der Retroreflektor (2) eine Anzeigefläche und/oder eine Ansichtsseite bildet, wobei der Retroreflektor (2) auf einer Innenseite der Karte aufgebracht ist, wobei der Retroreflektor (2) die Innenseite der Karte bildet, wobei die Karte eine Klappkarte mit mindestens zwei gegeneinander klappbaren Klappteilen ist, wobei die Lichtquelle (1) an einer Rückseite einer vor dem Retroreflektor (2) angeordneten Haltestruktur (17) der Karte angebracht ist, und/oder wobei die Karte ein zwischen dem Retroreflektor (2) der Haltestruktur (17) angeordnetes mechanisches Verbindungselement (8) aufweist.

**Claims**

1. A device for illuminating (10, 10', 20), comprising:

- a light source (1) for emitting light having a wavelength in the range from 380 nm to 780 nm;
- a retroreflector (2) mechanically connected to the light source (1) and having a retroreflection coefficient of at least 10 cd/(lx m$^2$) at the wavelength, the retroreflector (2) comprising optical elements (22) having a refractive index in a range from 1.6 to 1.97 at the wavelength, wherein the optical elements (22) are beads; and
- a shielding element (7, 17) which is arranged such that light emitted by the light source (1) in all directions pointing away from the retroreflector (2) is reflected and/or absorbed by the shielding element (7, 17).

2. The device according to claim 1, wherein the refractive index of the optical elements (22) is in a range from 1.68 to 1.97.

3. The device according to claim 1 or 2, wherein the optical elements (22) are microspheres, glass spheres or plastic spheres, wherein the optical elements (22) are partially surrounded by a layer reflecting the light, and/or wherein the retroreflector (2) is a retroreflector foil (2).

4. The device according to one of the preceding claims, wherein the light source is formed by an LED or an OLED.

5. The device according to claim 4, wherein the shielding element is provided by the LED or OLED that emits light only into a half-space.

**6.** The device according to one of the preceding claims, wherein the retroreflector (2) is arranged in front of the light source (1) such that light which is emitted from the light source (1) and is reflected by the retroreflector (2) can form an observable light phenomenon (3) in a plane (6) which is arranged between the retroreflector (2) and the light source (1) or intersects the light source (1), wherein the light phenomenon (3) has an opening angle ($\gamma_L$) with respect to a connecting line between the light source (1) and the retroreflector (2) which is at most 30°, and/or wherein the light phenomenon (3) in the plane (6) has a diameter ($d_3$) which is smaller than an extension ($d_2$) of the retroreflector (2) in a direction perpendicular to the connecting line.

**7.** The device according to one of the preceding claims, wherein the light source (1) is arranged at a distance (d) in front of the retroreflector (2), wherein an extension of the light source (1) perpendicular to a normal direction of the retroreflector (2) is equal to or less than one third of the distance (d), wherein a real image (3) of the light source (1) which can be produced with the device and at least partially surrounds the light source (1) has an aperture angle ($\gamma_L$) of less than 30° with respect to a connecting line between the light source (1) and the retroreflector (2), wherein the light source (1) comprises a luminous area of less than 1 cm$^2$ in an activated state, and/or wherein the light source (1) is arranged, in a perpendicular projection onto the retroreflector (2), within the retroreflector (2) and at a distance from an edge of the retroreflector (2).

**8.** The device according to one of the preceding claims, comprising a plurality of light sources (1) arranged in front of the retroreflector (2), and for each of the light sources (1) a shielding element (7, 17) which is arranged in such a way that light emitted by the respective light source (1) in all directions pointing away from the retroreflector (2) is reflected and/or absorbed by the shielding element (7, 17).

**9.** The device according to one of the preceding claims, wherein the retroreflector (2) comprises a retroreflective surface having a mean normal direction ($\eta_2$) substantially independent of the position on the retroreflective surface.

**10.** The device according to one of the preceding claims, wherein the light source (1) is arranged in front of the retroreflector (2) in such a way that the light source (1) assumes an angle ($\gamma_S$) when viewed from at least one optical element (22) of the retroreflector (2), which is smaller than an opening angle ($\gamma_L$) of a light cone that can be reflected back onto the light source (1) by the at least one optical element (22), and/or wherein the light source (1) is completely irradiated by an inner partial cone of the light cone.

**11.** The device according to one of the preceding claims, wherein the light source (1) is arranged in front of the retroreflector (2) in such a way that light which is emitted from the light source (1) and reflected by the retroreflector (2) forms a light phenomenon (3) observable from an observation area (4) located behind the light source (1) as seen from the retroreflector (2).

**12.** The device according to one of the preceding claims, wherein the device is a luminaire (20), in particular a glare-free luminaire.

**13.** The device according to any one of claims 1 to 11, wherein the device is a display device, and/or wherein the retroreflector (2) forms a display surface.

**14.** A card (30, 31, 32), comprising:

- a device according to one of claims 1 to 4,
wherein the light source (1) is arranged in front of the retroreflector (2) such that light emitted from the light source (1) and reflected by the retroreflector (2) forms an observable light phenomenon (3) in a plane (6), wherein the plane (6) is arranged between the retroreflector (2) and the light source (1) or intersects the light source (1), and wherein the light phenomenon (3) comprises an opening angle ($\gamma_L$) with respect to a connecting line between the light source (1) and the retroreflector (2) which lies in a range from 0.5° to 30°, and
wherein the shielding element is designed as a holding structure (17) arranged in front of the retroreflector (2), on the rear side of which, pointing towards the retroreflector (2), the light source (1) is attached, so that the light source (1) is concealed by the holding structure (17) in a top view of the holding structure (17) and the retroreflector (2).

**15.** The card according to claim 14, wherein the retroreflector (2) forms a display surface and/or a viewing side, wherein the retroreflector (2) is applied to an inner side of the card, wherein the retroreflector (2) forms the inner side of the card, wherein the card is a folding card with at least two folding parts which can be folded towards one another, wherein the light source (1) is attached to a rear side of a holding structure (17) of the card arranged in front of the retroreflector (2), and/or wherein the card comprises a mechanical connecting element (8) arranged between the retroreflector (2) and the holding structure (17).

**Revendications**

1. Dispositif d'éclairage (10, 10', 20) comprenant :

   - une source de lumière (1) pour l'émission de lumière présentant une longueur d'onde d'une plage de 380 nm à 780 nm ;
   - un rétroréflecteur (2) relié mécaniquement à la source de lumière (1) avec un coefficient de rétroréflexion d'au moins 10 cd/(lx m$^2$) pour la longueur d'onde, dans lequel le rétroréflecteur (2) présente des éléments optiques (22) avec un indice de réfraction dans une plage de 1,6 à 1,97 pour la longueur d'onde, dans lequel les éléments optiques (22) sont des petites billes ; et
   - un élément de blindage (7, 17) qui est agencé de sorte que de la lumière émise par la source de lumière (1) dans toutes les directions éloignées du rétroréflecteur (2) soit réfléchie et/ou absorbée par l'élément de blindage (7, 17).

2. Dispositif selon la revendication 1, dans lequel l'indice de réfraction des éléments optiques (22) se situe dans une plage de 1,68 à 1,97.

3. Dispositif selon la revendication 1 ou 2, dans lequel les éléments optiques (22) sont des microbilles, billes de verre ou billes de matière plastique, dans lequel les éléments optiques (22) sont partiellement entourés d'une couche réfléchissant la lumière, et/ou dans lequel le rétroréflecteur (2) est un film de rétroréflecteur (2).

4. Dispositif selon l'une quelconque des revendications précédentes, dans lequel la source de lumière est formée par une LED ou une OLED.

5. Dispositif selon la revendication 4, dans lequel l'élément de blindage est fourni par la LED ou l'OLED qui émet de la lumière seulement dans un espace semiinfini.

6. Dispositif selon l'une quelconque des revendications précédentes, dans lequel le rétroréflecteur (2) est agencé avant la source de lumière (1) de sorte que de la lumière qui sort de la source de lumière (1) et est réfléchie par le rétroréflecteur (2), puisse former un phénomène optique (3) observable dans un plan (6) qui est agencé entre le rétroréflecteur (2) et la source de lumière (1) ou coupe la source de lumière (1), dans lequel le phénomène optique (3) présente par rapport à une ligne de liaison entre la source de lumière (1) et le rétroréflecteur (2) un angle d'ouverture ($\gamma_L$) qui s'élève au maximum à 30°, et/ou dans lequel le phénomène optique (3) présente dans le plan (6) un diamètre ($d_3$) qui est inférieur à une extension ($d_2$) du rétroréflecteur (2) dans une direction perpendiculaire à la ligne de liaison.

7. Dispositif selon l'une quelconque des revendications précédentes, dans lequel la source de lumière (1) est agencée à une distance (d) avant le rétroréflecteur (2), dans lequel une extension de la source de lumière (1) perpendiculairement à une direction de normale du rétroréflecteur (2) est identique ou inférieure à un tiers de la distance (d), dans lequel une image (3) de la source de lumière (1) réelle entourant au moins partiellement la source de lumière (1), pouvant être générée avec le dispositif présente par rapport à une ligne de liaison entre la source de lumière (1) et le rétroréflecteur (2) un angle d'ouverture ($\gamma_L$) inférieur à 30°, dans lequel la source de lumière (1) présente dans un état activé une surface éclairante de moins de 1 cm$^2$, et/ou dans lequel la source de lumière (1) est agencée dans une projection perpendiculaire sur le rétroréflecteur (2) à l'intérieur du rétroréflecteur (2) et à distance d'un bord du rétroréflecteur (2).

8. Dispositif selon l'une quelconque des revendications précédentes, comprenant plusieurs sources de lumière (1) agencées avant le rétroréflecteur (2), et pour chacune des sources de lumière (1), un élément de blindage (7, 17) qui est agencé de sorte que de la lumière émise par la source de lumière (1) respective dans toutes les directions éloignées du rétroréflecteur (2) soit réfléchie et/ou absorbée par l'élément de blindage (7 ,17).

9. Dispositif selon l'une quelconque des revendications précédentes, dans lequel le rétroréflecteur (2) présente une surface rétroréfléchissante qui a une direction de normale ($\eta_2$) médiane sensiblement dépendante de la position de la surface rétroréfléchissante.

10. Dispositif selon l'une quelconque des revendications précédentes, dans lequel la source de lumière (1) est agencée avant le rétroréflecteur (2) de sorte que la source de lumière (1) occupe considéré depuis au moins un élément optique (2) du rétroréflecteur (22) un angle ($\gamma_S$) qui est inférieur à un angle d'ouverture ($\gamma_L$) d'un cône lumineux rétroréfléchissable de l'au moins un élément optique (22) sur la source de lumière (1), et/ou dans lequel la source de lumière (1) est complètement irradiée par un cône partiel intérieur du cône lumineux rétroréfléchissable.

11. Dispositif selon l'une quelconque des revendications précédentes, dans lequel la source de lumière (1) est agencée avant le rétroréflecteur (2) de sorte que la lumière qui sort de la source de lumière (1) et est réfléchie par le rétroréflecteur (2), forme un phénomène optique (3) observable depuis une zone d'observation (4) placée derrière la source de lumière (1), considéré depuis le rétroréflecteur (2).

12. Dispositif selon l'une quelconque des revendications précédentes, dans lequel le dispositif est une lampe (20), en particulier une lampe anti-éblouissement.

13. Dispositif selon l'une quelconque des revendications 1 à 11, dans lequel le dispositif est un dispositif d'affichage, et/ou dans lequel le rétroréflecteur (2) forme une surface d'affichage.

14. Carte (30, 31, 32) comprenant :

- un dispositif selon l'une quelconque des revendications 1 à 4,
dans laquelle la source de lumière (1) est agencée avant le rétroréflecteur (2) de sorte que de la lumière qui sort de la source de lumière (1) et est réfléchie par le rétroréflecteur (2), forme un phénomène optique (3) observable dans un plan (6), dans laquelle le plan (6) est agencé entre le rétroréflecteur (2) et la source de lumière (1) ou coupe la source de lumière (1), et dans laquelle le phénomène optique (3) présente par rapport à une ligne de liaison entre la source de lumière (1) et le rétroréflecteur (2) un angle d'ouverture ($\gamma_L$) qui se situe dans une plage de 0,5° à 30°, et
dans laquelle l'élément de blindage est réalisé comme une structure de retenue (17) agencée avant le rétroréflecteur (2), au niveau du côté arrière de laquelle tourné vers le rétroréflecteur (2) la source de lumière (1) est montée de sorte que la source de lumière (1) soit recouverte par la structure de retenue (17) dans une vue en élévation de la structure de retenue (17) et du rétroréflecteur (2).

15. Carte selon la revendication 14, dans laquelle le rétroréflecteur (2) forme une surface d'affichage et/ou un côté visible, dans laquelle le rétroréflecteur (2) est appliqué sur un côté intérieur de la carte, dans laquelle le rétroréflecteur (2) forme le côté intérieur de la carte, dans laquelle la carte est une carte pliante avec au moins deux parties pliantes rabattables l'une contre l'autre, dans laquelle la source de lumière (1) est montée au niveau d'un côté arrière d'une structure de retenue (17) agencée avant le rétroréflecteur (2) de la carte et/ou dans laquelle la carte présente un élément de liaison (8) mécanique agencé entre le rétroréflecteur (2) de la structure de retenue (17).

FIG 1

FIG 2

FIG 3

## FIG 4

## FIG 5

## FIG 6

## FIG 7

## FIG 8

# FIG 9

# FIG 10

**FIG 11**

**FIG 12**

**FIG 13**

FIG 14

FIG 15

## FIG 16

## FIG 17

## FIG 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130301279 A1